(19) Europäisches Patentamt
European Patent Office
Office européen des brevets

(11) **EP 4 787 027 A1**

(12) **EUROPEAN PATENT APPLICATION**
published in accordance with Art. 153(4) EPC

(43) Date of publication:
**05.08.2026  Bulletin 2026/32**

(51) International Patent Classification (IPC):
**G02B 1/14** (2015.01)          **B32B 3/30** (2006.01)
**G02B 5/30** (2006.01)

(21) Application number: **24872590.5**

(52) Cooperative Patent Classification (CPC):
**B32B 3/30; G02B 1/14; G02B 5/30**

(22) Date of filing: **30.09.2024**

(86) International application number:
**PCT/JP2024/034901**

(87) International publication number:
**WO 2025/070811 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.09.2023  JP 2023170148**

(71) Applicant: **Dai Nippon Printing Co., Ltd.**
**Tokyo 162-8001 (JP)**

(72) Inventors:
• **HATA Kentaro**
 **Tokyo 162-8001 (JP)**
• **KAWASE Michihiro**
 **Tokyo 162-8001 (JP)**
• **TAKEI Michiaki**
 **Tokyo 162-8001 (JP)**
• **WATANABE Osamu**
 **Tokyo 162-8001 (JP)**
• **IKEDA Keisuke**
 **Tokyo 162-8001 (JP)**

(74) Representative: **Cabinet Beau de Loménie**
**103, rue de Grenelle / CS 90800**
**75340 Paris Cedex 07 (FR)**

(54) **OPTICAL SHEET, SHEET ARTICLE, POLARIZING PLATE, DISPLAY DEVICE, PANEL, OPTICAL SHEET SELECTION METHOD, AND OPTICAL SHEET MANUFACTURING METHOD**

(57)     An optical sheet has a first surface and a second surface opposing the first surface. The optical sheet includes a substrate and a functional layer in order from the second surface toward the first surface. The functional layer contains a binder component and hollow silica particles. In a 10 μm × 10 μm region of the first surface, at least one recess having a width of 0.1 μm or more and 1.5 μm or less and a depth of 10 nm or more is included.

FIG. 1

**Description**

Technical Field

The present disclosure relates to an optical sheet, a sheet article, a polarizing plate, a display device, a panel, an optical sheet selection method, and an optical sheet manufacturing method.

Background Art

The outermost surface of known display devices has been composed of a cover glass. The cover glass has a reflection-reducing function imparted thereto that reduces reflection of incident light. In recent years, the application of an optical sheet made of resin in place of a cover glass has been considered from the viewpoint of making display devices thinner and lighter. The optical sheet has a functional layer having a low refractive index as its surface layer. The functional layer can be produced by sputtering an inorganic material. In another method, as disclosed in PTL 1, the functional layer can be produced by curing a coating film containing hollow silica particles. A layer having a low refractive index obtained by curing a coating film containing particles having a low refractive index has advantages such as little change in the hue of diagonal incident light, excellent chemical stability, and low manufacturing cost.

Not only to display devices for smartphones and tablet computers but also to those for equipment such as laptop PCs, the application of a touch-sensing function has spread. An optical sheet applied to such a display device is required to have abrasion resistance suitable for the intended use. Abrasion resistance of a functional layer containing hollow silica particles is somewhat inferior to abrasion resistance of an inorganic material layer formed by sputtering.

PTL 1: WO2019/208786A

Summary of Invention

An object of the present disclosure is to improve abrasion resistance of an optical sheet containing hollow silica particles.

An optical sheet according to an embodiment of the present disclosure is:

an optical sheet including a first surface and a second surface opposing the first surface, the optical sheet including:

a substrate and a functional layer in order from the second surface toward the first surface, wherein:

    the functional layer contains a binder component and hollow silica particles; and

    in a 10 $\mu$m $\times$ 10 $\mu$m region of the first surface, at least one recess having a width of 0.1 $\mu$m or more and 1.5 $\mu$m or less and a depth of 10 nm or more is included.

A sheet article according to an embodiment of the present disclosure includes multiple optical sheets according to an embodiment of the present disclosure.

A polarizing plate according to an embodiment of the present disclosure includes:

a first protection sheet, a polarizer, and a second protection sheet, wherein:

    at least one of the first protection sheet or the second protection sheet includes the optical sheet according to an embodiment of the present disclosure.

A display device according to an embodiment of the present disclosure includes:

    an image formation unit; and

    the optical sheet according to an embodiment of the present disclosure stacked to the image formation unit.

A panel according to an embodiment of the present disclosure includes:

    a bonding target article; and

    the optical sheet according to an embodiment of the present disclosure bonded to the bonding target article.

An optical sheet selection method according to an embodiment of the present disclosure relates to:

optical sheets including a first surface and a second surface opposing the first surface, the optical sheets including:

**EP 4 787 027 A1**

a substrate and a functional layer in order from the second surface toward the first surface, wherein:
the functional layer contains a binder component and hollow silica particles, the method including:

a step of acquiring an image of a 10 μm × 10 μm region of the first surface; and

a step of selecting, based on the image, an optical sheet for which at least one recess having a width of 0.1 μm or more and 1.5 μm or less and a depth of 10 nm or more is included in the region.

An optical sheet manufacturing method according to an embodiment of the present disclosure includes:
a step of producing optical sheets including a first surface and a second surface opposing the first surface, the optical sheets including:
a substrate and a functional layer in order from the second surface toward the first surface, wherein:

the functional layer contains a binder component and hollow silica particles; and

a step of selecting an optical sheet for which at least one recess having a width of 0.1 μm or more and 1.5 μm or less and a depth of 10 nm or more is included in a 10 μm × 10 μm region of the first surface.

According to the present invention, abrasion resistance of an optical sheet containing hollow silica particles can be improved.

Brief Description of Drawings

[Fig. 1] Fig. 1 is a diagram for describing an embodiment and is a cross-sectional view illustrating an example of an optical sheet.

[Fig. 2] Fig. 2 is a plan view illustrating an example of a recess formed in the first surface of an optical sheet.

[Fig. 3] Fig. 3 is a cross-sectional view illustrating an example of a cross-sectional profile of a recess formed in the first surface of an optical sheet and illustrates a cross-section along line III-III in Fig. 2.

[Fig. 4] Fig. 4 is a cross-sectional view corresponding to Fig. 3 and illustrates another example of a cross-sectional profile of a recess.

[Fig. 5] Fig. 5 is a plan view illustrating the first surface of an optical sheet and is a diagram illustrating an example of a distribution of recesses.

[Fig. 6] Fig. 6 is a plan view illustrating the first surface of an optical sheet and is a diagram illustrating an example of a distribution of recesses.

[Fig. 7] Fig. 7 is a diagram corresponding to Fig. 1 and is a cross-sectional view illustrating another example of an optical sheet.

[Fig. 8] Fig. 8 is a perspective view illustrating an example of a sheet article including optical sheets.

[Fig. 9] Fig. 9 is a cross-sectional view illustrating an example of a polarizing plate including an optical sheet.

[Fig. 10] Fig. 10 is a cross-sectional view illustrating an example of a display device including an optical sheet.

[Fig. 11] Fig. 11 is a cross-sectional view illustrating an example of a panel including an optical sheet.

[Fig. 12] Fig. 12 is an image depicting a surface in Example 1.

[Fig. 13] Fig. 13 is an image depicting a surface in Example 2.

[Fig. 14] Fig. 14 is an image depicting a surface in Example 3.

3

# EP 4 787 027 A1

[Fig. 15] Fig. 15 is an image depicting a surface in Comparative Example 1.

Description of Embodiments

An embodiment of the present disclosure relates to the following <1> to <20>.
<1> An optical sheet including a first surface and a second surface opposing the first surface, the optical sheet including:

a substrate and a functional layer in order from the second surface toward the first surface, wherein:

the functional layer contains a binder component and hollow silica particles; and
in a 10 $\mu$m $\times$ 10 $\mu$m region of the first surface, at least one recess having a width of 0.1 $\mu$m or more and 1.5 $\mu$m or less and a depth of 10 nm or more is included.

<2> The optical sheet according to <1>, wherein the depth of the recess is 70 nm or less.
<3> The optical sheet according to <1> or <2>, wherein the number of recesses included in the 10 $\mu$m $\times$ 10 $\mu$m region of the first surface is three or more.
<4> The optical sheet according to any one of <1> to <3>, wherein the number of recesses included in the 10 $\mu$m $\times$ 10 $\mu$m region of the first surface is 11 or more.
<5> The optical sheet according to any one of <1> to <4>, wherein the number of recesses included in the 10 $\mu$m $\times$ 10 $\mu$m region of the first surface is 50 or less.
<6> The optical sheet according to any one of <1> to <5>, wherein the recess is included in each of four subareas obtained by bisecting the 10 $\mu$m $\times$ 10 $\mu$m region along each side.
<7> The optical sheet according to any one of <1> to <6>, wherein an arithmetic mean roughness Sa on the first surface is 8.0 nm or less.
<8> The optical sheet according to any one of <1> to <7>, wherein the first surface includes a flat portion around the recess.
<9> The optical sheet according to any one of <1> to <8>, wherein a proportion of the recess in the 10 $\mu$m $\times$ 10 $\mu$m region of the first surface is 15% or less.
<10> The optical sheet according to any one of <1> to <9>, wherein a ratio of the depth to the width of the recess is 0.030 or greater.
<11> The optical sheet according to any one of <1> to <10>, wherein the optical sheet has resistance to an abrasion resistance test using steel wool on the first surface performed under the following conditions.

Abrasion resistance test: Steel wool #0000 is used as an abrasive material and is reciprocated for 1000 cycles under a load of 1000 g at a movement speed of 80 mm/second, with a one-way travel distance being 40 mm.
<12>
The optical sheet according to any one of <1> to <11>, wherein the optical sheet has resistance to an abrasion resistance test using felt on the first surface performed under the following conditions.
Abrasion resistance test: "Jumbo Wearaser®; product number, CS-7," manufactured by TABER Industries, is used as an abrasive material and is reciprocated for 10000 cycles under a load of 200 g at a movement speed of 200 mm/second, with a one-way travel distance being 50 mm.
<13> The optical sheet according to any one of <1> to <12>, wherein:

the optical sheet includes a resin layer positioned between the substrate and the functional layer; and
the resin layer contains a cured product of a curable resin composition.

<14> A sheet article including multiple optical sheets according to any one of <1> to <13>.
<15> The sheet article according to <14>, wherein the article is rolled with a roll axis as a center.
<16> A polarizing plate including:
a first protection sheet, a polarizer, and a second protection sheet, wherein:
at least one of the first protection sheet or the second protection sheet includes the optical sheet according to any one of <1> to <13>.
<17> A display device including:

an image formation unit; and
the optical sheet according to any one of <1> to <13> stacked to the image formation unit.

<18> A panel including:

a bonding target article; and
the optical sheet according to any one of <1> to <13> bonded to the bonding target article.

<19> An optical sheet selection method relating to:
optical sheets including a first surface and a second surface opposing the first surface, the optical sheets including:
a substrate and a functional layer in order from the second surface toward the first surface, wherein:
the functional layer contains a binder component and hollow silica particles, the method including:

a step of acquiring an image of a 10 $\mu$m $\times$ 10 $\mu$m region of the first surface; and
a step of selecting, based on the image, an optical sheet for which at least one recess having a width of 0.1 $\mu$m or more and 1.5 $\mu$m or less and a depth of 10 nm or more is included in the region.

<20> An optical sheet manufacturing method including:
a step of producing optical sheets including a first surface and a second surface opposing the first surface, the optical sheets including:
a substrate and a functional layer in order from the second surface toward the first surface, wherein:

the functional layer contains a binder component and hollow silica particles; and

a step of selecting an optical sheet for which at least one recess having a width of 0.1 $\mu$m or more and 1.5 $\mu$m or less and a depth of 10 nm or more is included in a 10 $\mu$m $\times$ 10 $\mu$m region of the first surface.

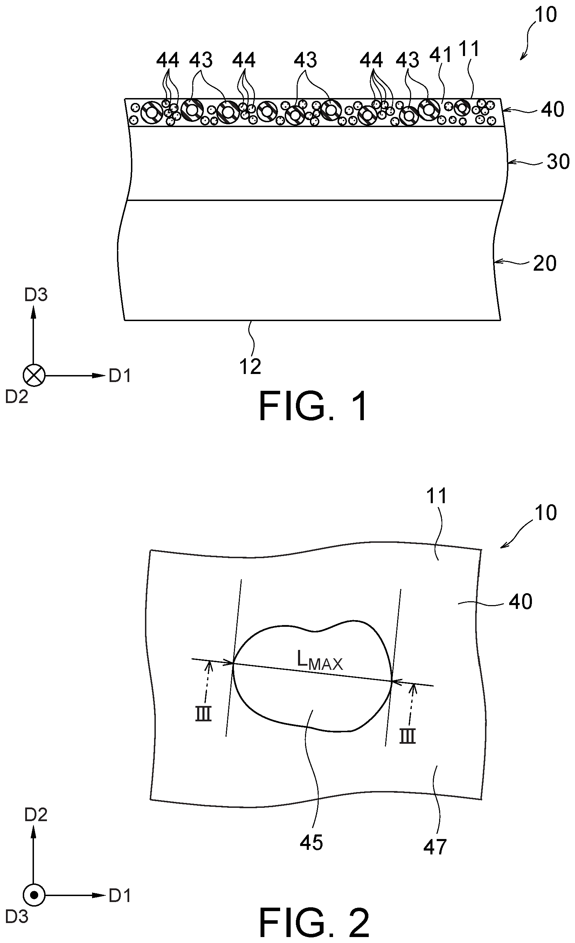

The details of an embodiment of the present disclosure will now be described. In the drawings attached hereto, the scale, aspect ratios, and other details differ from those of actual objects and are exaggerated as appropriate for the sake of convenience in illustration and ease of understanding.
As used herein, terms such as "sheet," "film," and "plate" are not differentiated from one another solely based on the difference in nominal designation. For example, an "optical sheet" cannot be differentiated from, for instance, an element referred to as an optical film or an optical plate solely by the difference in nominal designation.
"Sheet plane (film plane or plate plane)" refers to a plane that coincides with the direction along the plane of the sheet-shaped element (film-shaped element or plate-shaped element) of interest when the sheet-shaped element (film-shaped element or plate-shaped element) of interest is viewed holistically and broadly. Direction normal to a sheet-shaped (plate-shaped or film-shaped) element refers to a direction normal to a sheet plane (plate plane or film plane) of the sheet-shaped (plate-shaped or film-shaped) element.
Herein, multiple candidate upper limits and multiple candidate lower limits for a numerical range may be specified in separate sentences. In this type of statement, the numerical range may be constituted by pairing any one candidate upper limit with any one candidate lower limit. As an example, the following statement is discussed: "Parameter B may be A1 or more, may be A2 or more, or may be A3 or more. Parameter B may be A4 or less, may be A5 or less, or may be A6 or less." In this example, the numerical range of parameter B may be from A1 to A4, inclusive, may be from A1 to A5, inclusive, may be from A1 to A6, inclusive, may be from A2 to A4, inclusive, may be from A2 to A5, inclusive, may be from A2 to A6, inclusive, may be from A3 to A4, inclusive, may be from A3 to A5, inclusive, or may be from A3 to A6, inclusive.
To clarify dimensional relationships among the drawings, some drawings indicate the same directions using arrows with reference signs common to the drawings. The distal side of an arrow is the first side of that direction. The side opposite the distal end of an arrow is the second side of that direction. An arrow pointing toward the back of the page of the drawing along the direction perpendicular to the page is indicated by a symbol of $\times$ in a circle, for example as illustrated in Fig. 1. An arrow pointing toward the front of the page of the drawing along the direction perpendicular to the page is indicated by a symbol of a dot in a circle, for example as illustrated in Fig. 2.

<<<Optical Sheet 10>>>

As illustrated in Fig. 1, an optical sheet 10 according to this embodiment includes a first surface 11 and a second surface 12. The optical sheet 10 includes a substrate 20 and a functional layer 40 in order from the first surface 11 to the second surface 12. The functional layer 40 contains a binder component 41 and hollow silica particles 43. The refractive index of the functional layer 40 is lower than the refractive index of the binder component 41 as a result of inclusion of the hollow silica particles 43. With a functional layer 40 having a low refractive index, reflection of light incident on the first surface 11 can be reduced.

The thickness of the functional layer having a reflection-reducing function is as small as approximately 100 nm. Known optical sheets have experienced damage to the first surface, for example when a functional layer having a low refractive index is rubbed with a finger. The functional layer contains hollow silica particles to have a reduced refractive index. The hollow silica particles have a relatively large particle diameter because they have a hollow structure. The hollow silica particles, therefore, easily break, and also easily detach from the binder component, for example as a result of deformation. For this reason, abrasion resistance of the surface of the functional layer of known optical sheets has been insufficient.

In this embodiment, however, measures for improving abrasion resistance are implemented. Specifically, in a 10 $\mu$m $\times$ 10 $\mu$m square measurement region of the first surface 11, one or more recesses having a width of 0.1 $\mu$m or more and a depth of 10 nm or more are included. When a recess 45 having a width of 0.1 $\mu$m or more and a depth of 10 nm or more is present, abrasion resistance can be improved. The details of the reason for the improved abrasion resistance resulting from the presence of a recess 45 are unclear. Presumably, bleeding out (separation) of a leveling agent influences the improvement of abrasion resistance. The leveling agent is added to a coating solution used to form the functional layer 40. The leveling agent migrates to the vicinity of the surface of the functional layer 40 when the functional layer 40 is produced. The leveling agent reduces surface tension of the functional layer 40, thereby smoothing the surface of the functional layer 40. With a leveling agent, lubricity and antifouling properties of the first surface 11 improve.

The inventors tried various leveling agents, and recesses 45 appeared when a particular combination of leveling agents was used. For optical sheets 10 in which recesses 45 were present, furthermore, abrasion resistance of the first surface 11 improved. As an example, when a silicone leveling agent was added to a fluorine leveling agent, abrasion resistance of the first surface 11 could improve. From such phenomena, the inventors presumed that with a particular combination of leveling agents, the leveling agents bled out at the first surface 11. In this presumption, the recesses 45 are considered to be marks left after the bleeding out of the leveling agents. For optical sheets 10 in which recesses 45 were present, lubricity of the first surface 11 significantly improved by virtue of leveling agents that bled out of the functional layer 40. As a result, it is considered that abrasion resistance improved.

The recesses 45 are confirmed using an atomic force microscope (AFM). From the optical sheet 10 of interest, three measurement samples are cut out. The three measurement samples are cut out from regions that are at least 10 mm separated from one another within the optical sheet. The size of each measurement sample is a 5 mm $\times$ 5 mm square. The measurement samples are visually inspected to confirm the absence of adhering contaminants, flaws, and other abnormalities. For each measurement sample, images of the first surface in five measurement regions separate from one another are acquired using an atomic force microscope. The measurement regions are 10 $\mu$m $\times$ 10 $\mu$m squares. For the five measurement regions for each of the three measurement samples, that is, for a total of 15 measurement points, an image is acquired using an atomic force microscope. When at least one recess 45 is observed in 12 or more of the 15 images obtained, the sheet is judged to have a recess 45 present in a 10 $\mu$m $\times$ 10 $\mu$m square measurement region of the first surface 11. When no recess 45 is observed in four or more images, the sheet is judged to have no recess 45 present in a 10 $\mu$m $\times$ 10 $\mu$m square measurement region of the first surface 11.

The atomic force microscope can be "SPM-9700," manufactured by Shimadzu Corporation. The cantilever can be NCHR, manufactured by NanoWorld AG (resonant frequency, 320 kHz; spring constant, 42 N/m). The measurement of the surface profile of the samples can be conducted using "SPM Manager," the software attached to the atomic force microscope, in its On-Line (measurement) mode. The measurement conditions can be set as follows.

- Measurement mode: phase

- Scanning size: 10 $\mu$m $\times$ 10 $\mu$m

- Scanning rate: 2.0 to 2.5 Hz (a 10-$\mu$m scanner is used)

- Number of pixels: 512 $\times$ 512

The width W and the depth D of recesses 45 in each measurement region are determined as follows. First, a 10 $\mu$m $\times$ 10 $\mu$m square measurement region is observed in the direction normal to the optical sheet 10, whereby a plan view image of the measurement region is acquired. The plan view image is an image of the first surface 11 observed in the direction normal to the optical sheet 10 using an atomic force microscope. Based on the plan view image of the measurement region, a recess 45 having the longest maximum length $L_{MAX}$ among the recesses 45 present within the measurement region is identified. The maximum length $L_{MAX}$ represents the maximum length of a straight segment connecting two points on the outline of the recess 45 in the observation of the measurement region in the direction normal to the optical sheet 10. In other words, the maximum length $L_{MAX}$ corresponds to the maximum value of the line-to-line distance between two parallel straight lines that sandwich the recess 45. Fig. 2 is a plan view illustrating an example of a recess 45 viewed in the direction normal to the optical sheet 10. As an example, the recess 45 illustrated in Fig. 2 is the recess 45 having a maximum length $L_{MAX}$ that is the longest within the measurement region.

The shape of the recess 45 in the observation in the direction normal to the optical sheet 10, or the plan view shape of the recess 45, is not particularly limited. The plan view shape of the recess 45 may have a curved contour, may have a straight-line contour, or may have a contour formed by a combination of curve(s) and straight line(s). The plan view shape of the recess 45 may be a round shape or may be an elliptical shape or an elongated round shape. The plan view shape of the recess 45 may be a polygonal shape, such as a triangular shape, a tetragonal shape, or a pentagonal shape.

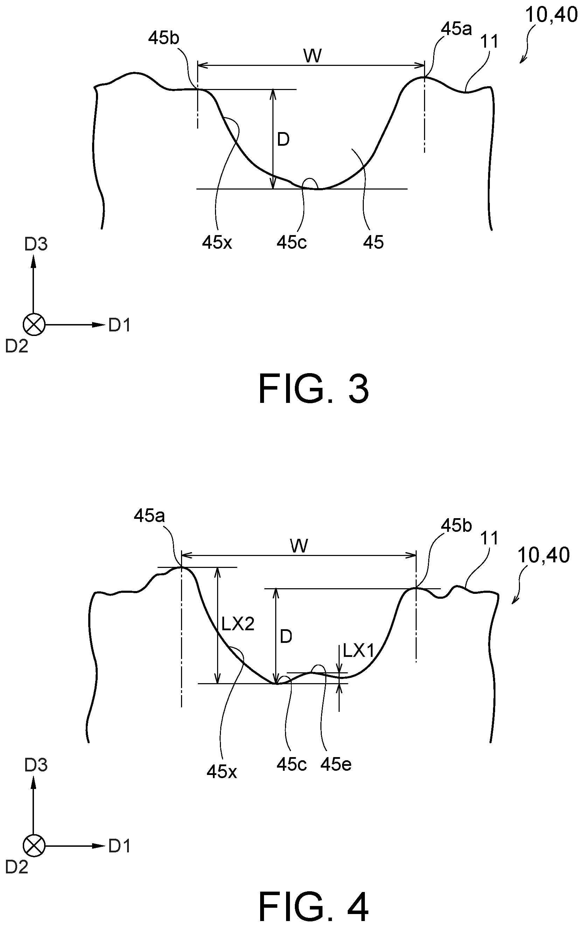

Then a cross-sectional image for measurement is acquired using an atomic force microscope. The cross-sectional image for measurement is an observed image of a plane parallel to the direction normal to the optical sheet 10. The cross-sectional image for measurement is an observed image of a plane that traverses the recess 45 within the measurement region. The cross-sectional image for measurement is an observed image of a plane that includes the two points on the outline of the recess 45 with which the maximum length $L_{MAX}$ of the recess 45 is obtained. That is, the cross-sectional image for measurement is a cross-section along line III-III in Fig. 2. Fig. 3 illustrates an example of a cross-sectional image for measurement.

From the cross-sectional profile 45x in the cross-sectional image for measurement of the recess 45 as illustrated in Fig. 3, the deepest point 45c of the recess 45 is located. The deepest point 45c is the lowest point within the recess. Then the higher edge 45a and the lower edge 45b, which are the two edges of the recess 45 in the cross-sectional profile 45x of the recess 45, are located. The higher edge 45a is the higher one of the two edges of the recess 45. The lower edge 45b is the lower one of the two edges of the recess 45. The higher edge 45a and the lower edge 45b are located as the first inflection points (maxima) in the direction normal to the optical sheet 10 positioned on both sides of the deepest point 45c, with one inflection point on one side, in the cross-sectional profile 45x of the recess 45.

The width W of the recess 45 in each measurement region represents the distance between the higher edge 45a and the lower edge 45b along the sheet plane of the optical sheet 10. In the example illustrated in Fig. 3, the width W of the recess 45 represents the distance between the higher edge 45a and the lower edge 45b along the first direction D1. The depth D of the recess 45 in each measurement region represents the distance between the lower edge 45b and the deepest point 45c in the direction normal to the optical sheet 10. In the example illustrated in Fig. 3, the depth D of the recess 45 represents the distance between the lower edge 45b and the deepest point 45c along the third direction D3.

As illustrated in Fig. 4, however, a minute projection 45e may be present inside a recess 45. When the two edges of the recess 45 are located by the method described above, the large depression positioned in the middle of Fig. 4 is, unfortunately, divided by the projection 45e into two recesses 45. On the assumption that the improvement of lubricity of the first surface 11 results from bleeding out of a leveling agent, however, the depression positioned in the middle of Fig. 4 should be deemed as one recess 45. When considered from the belief that the structure of recesses physically reduces lubricity, too, the depression positioned in the middle of Fig. 4 should be deemed as one recess 45.

To address this, when the distance between the tentative lower edge (projection 45e) and the deepest point 45c along the direction normal to the optical sheet 10 as described above, which is the first distance LX1, is 30% or less of the distance between the higher edge 45a and the deepest point 45c along the direction normal to the optical sheet 10, which is the second distance LX2, the tentative lower edge is handled as a projection 45e rather than a lower edge 45b relating to the recess 45. In the example illustrated in Fig. 4, the distance LX1 between the deepest point 45c and the projection 45e along the third direction D3 is 30% or less of the distance LX2 between the higher edge 45a and the deepest point 45c along the third direction D3. The projection 45e, therefore, does not constitute a lower edge 45b.

In such a manner, the width W of the recess 45 in each measurement region and the depth D of the recess 45 in each measurement region are determined. From the width W of the recess 45 and the depth D of the recess 45 determined in such a manner, it is judged whether or not the recess meets the definition of a recess having a width of 0.1 μm or more and a depth of 10 nm or more.

It should be noted that when the width W of the recess 45 having the longest maximum length $L_{MAX}$ is 0.1 μm or more but the depth D of the recess is less than 10 nm, the recess does not meet the definition of "a recess having a width of 0.1 μm or more and a depth of 10 nm or more." When the depth D of the recess 45 having the longest maximum length $L_{MAX}$ is 10 nm or more but the width W of the recess is less than 0.1 μm, the recess does not meet the definition of "a recess having a width of 0.1 μm or more and a depth of 10 nm or more." In such cases, the investigation on whether or not the 10 μm × 10 μm square measurement region includes "a recess having a width of 0.1 μm or more and a depth D of 10 nm or more" is continued. A recess 45 having a maximum length $L_{MAX}$ that is the second longest within the 10 μm × 10 μm square measurement region is identified, and the width W and the depth D of the identified recess are measured. From the measured values of width W and depth D, it is judged whether or not the recess under measurement meets the definition of "a recess having a width W of 0.1 μm or more and a depth D of 10 nm or more." Until "a recess having a width W of 0.1 μm or more and a depth of 10 nm or more" is found or until there is no recess 45 that needs to be measured, judgment is repeated.

For the optical sheet 10 according to this embodiment, as stated above, the width W of the recesses 45 is 0.1 μm or more in order for improvement of abrasion resistance to be sought. For further improvement of abrasion resistance to be sought, the width W of the recesses 45 may be 0.2 µm or more, may be 0.3 µm or more, or may be 0.4 µm or more. For improvement of abrasion resistance to be sought, the depth D of the recesses 45 is 10 nm or more. For further improvement of abrasion resistance to be sought, the depth D of the recesses 45 may be 15 nm or more, may be 18 nm or more, may be 20 nm or more, or may be 23 nm or more.

For the optical sheet 10 according to this embodiment, an upper limit may be set on the width W of the recesses 45 formed in the first surface 11. An upper limit may be set on the depth D of the recesses 45 formed in the first surface 11. By setting an upper limit, too, lubricity of the first surface 11 can be ensured. A decrease in lubricity caused by formation of large depressions in the first surface 11, that is, a decrease in lubricity caused by, for example, physical catching, can be reduced. For this reason, the width W of the recesses 45 may be 2.0 µm or less, may be 1.5 µm or less, may be 1.4 µm or less, may be 1.1 µm or less, may be 1.0 µm or less, may be 0.8 µm or less, may be 0.6 µm or less, or may be less than 0.5 µm. The depth D of the recesses 45 may be 70 nm or less, may be 61 nm or less, may be 60 nm or less, may be 55 nm or less, may be 50 nm or less, may be 40 nm or less, may be 38 nm or less, may be 30 nm or less, or may be 24 nm or less.

The width W of the recesses 45 may be 0.1 µm or more and 2.0 µm or less, may be 0.2 µm or more and 2.0 µm or less, may be 0.3 µm or more and 2.0 µm or less, or may be 0.4 µm or more and 2.0 µm or less. The width W of the recesses 45 may be 0.1 µm or more and 1.5 µm or less, may be 0.2 µm or more and 1.5 µm or less, may be 0.3 µm or more and 1.5 µm or less, or may be 0.4 µm or more and 1.5 µm or less. The width W of the recesses 45 may be 0.1 µm or more and 1.4 µm or less, may be 0.2 µm or more and 1.4 µm or less, may be 0.3 µm or more and 1.4 µm or less, or may be 0.4 µm or more and 1.4 µm or less. The width W of the recesses 45 may be 0.1 µm or more and 1.1 µm or less, may be 0.2 µm or more and 1.1 µm or less, may be 0.3 µm or more and 1.1 µm or less, or may be 0.4 µm or more and 1.1 µm or less. The width W of the recesses 45 may be 0.1 µm or more and 1.0 µm or less, may be 0.2 µm or more and 1.0 µm or less, may be 0.3 µm or more and 1.0 µm or less, or may be 0.4 µm or more and 1.0 µm or less. The width W of the recesses 45 may be 0.1 µm or more and 0.8 µm or less, may be 0.2 µm or more and 0.8 µm or less, may be 0.3 µm or more and 0.8 µm or less, or may be 0.4 µm or more and 0.8 µm or less. The width W of the recesses 45 may be 0.1 µm or more and 0.6 µm or less, may be 0.2 µm or more and 0.6 µm or less, may be 0.3 µm or more and 0.6 µm or less, or may be 0.4 µm or more and 0.6 µm or less. The width W of the recesses 45 may be 0.1 µm or more and less than 0.5 µm, may be 0.2 µm or more and less than 0.5 µm, may be 0.3 µm or more and less than 0.5 µm, or may be 0.4 µm or more and less than 0.5 µm.

The depth D of the recesses 45 may be 10 nm or more and 70 nm or less, may be 15 nm or more and 70 nm or less, may be 18 nm or more and 70 nm or less, may be 20 nm or more and 70 nm or less, or may be 23 nm or more and 70 nm or less. The depth D of the recesses 45 may be 10 nm or more and 61 nm or less, may be 15 nm or more and 61 nm or less, may be 18 nm or more and 61 nm or less, may be 20 nm or more and 61 nm or less, or may be 23 nm or more and 61 nm or less. The depth D of the recesses 45 may be 10 nm or more and 60 nm or less, may be 15 nm or more and 60 nm or less, may be 18 nm or more and 60 nm or less, may be 20 nm or more and 60 nm or less, or may be 23 nm or more and 60 nm or less. The depth D of the recesses 45 may be 10 nm or more and 55 nm or less, may be 15 nm or more and 55 nm or less, may be 18 nm or more and 55 nm or less, may be 20 nm or more and 55 nm or less, or may be 23 nm or more and 55 nm or less. The depth D of the recesses 45 may be 10 nm or more and 50 nm or less, may be 15 nm or more and 50 nm or less, may be 18 nm or more and 50 nm or less, may be 20 nm or more and 50 nm or less, or may be 23 nm or more and 50 nm or less. The depth D of the recesses 45 may be 10 nm or more and 40 nm or less, may be 15 nm or more and 40 nm or less, may be 18 nm or more and 40 nm or less, may be 20 nm or more and 40 nm or less, or may be 23 nm or more and 40 nm or less. The depth D of the recesses 45 may be 10 nm or more and 38 nm or less, may be 15 nm or more and 38 nm or less, may be 18 nm or more and 38 nm or less, may be 20 nm or more and 38 nm or less, or may be 23 nm or more and 38 nm or less. The depth D of the recesses 45 may be 10 nm or more and 30 nm or less, may be 15 nm or more and 30 nm or less, may be 18 nm or more and 30 nm or less, may be 20 nm or more and 30 nm or less, or may be 23 nm or more and 30 nm or less. The depth D of the recesses 45 may be 10 nm or more and 24 nm or less, may be 15 nm or more and 24 nm or less, may be 18 nm or more and 24 nm or less, may be 20 nm or more and 24 nm or less, or may be 23 nm or more and 24 nm or less.

As described above, for one measurement region, the width W and the depth D of recesses 45 are measured in order of the length of the maximum length $L_{MAX}$ determined from a microscopic observation image. The width W and the depth D of the recess 45 for the recess 45 judged to meet the definition of "a recess having a width W of 0.1 µm or more and a depth D of 10 nm or more" are defined as the width W and the depth D of recesses 45 in that measurement region.

As mentioned above, for one optical sheet 10 under evaluation, the presence or absence of "a recess having a width W of 0.1 µm or more and a depth D of 10 nm or more" is judged in a total of 15 measurement regions. The arithmetic mean of the widths W of recesses 45 measured in the 12 or more measurement regions judged to have "a recess having a width W of 0.1 µm or more and a depth D of 10 nm or more" is defined as the width W of recesses 45 for the optical sheet under evaluation. The arithmetic mean of the depths D of recesses 45 measured in the 12 or more measurement regions judged to have "a recess having a width W of 0.1 µm or more and a depth D of 10 nm or more" is defined as the depth D of recesses 45 for the optical sheet under evaluation. For example, when the 15 measurement regions for a certain optical sheet include two measurement regions in which no recess 45 is present, the arithmetic means of the measured values in the 13 measurement regions are used as the width W of recesses 45 and the depth D of recesses 45 of this optical sheet.

A lower limit may be set on the ratio of the depth D to the width W (D/W) of recesses 45. By setting a lower limit on the ratio (D/W), abrasion resistance on the first surface 11 of the optical sheet 10 can be improved in a stable manner. The ratio (D/W) may be 0.030 or greater, may be 0.035 or greater, may be 0.040 or greater, may be 0.044 or greater, or may be 0.048 or greater.

The upper limit to the ratio of the depth D to the width W (D/W) of recesses 45 is not particularly specified. The ratio (D/W) may be 0.15 or less, may be 0.10 or less, or may be 0.075 or less.

The ratio (D/W) may be 0.030 or greater and 0.15 or less, may be 0.035 or greater and 0.15 or less, may be 0.040 or greater and 0.15 or less, may be 0.044 or greater and 0.15 or less, or may be 0.048 or greater and 0.15 or less. The ratio (D/W) may be 0.030 or greater and 0.10 or less, may be 0.035 or greater and 0.10 or less, may be 0.040 or greater and 0.10 or less, may be 0.044 or greater and 0.10 or less, or may be 0.048 or greater and 0.10 or less. The ratio D (D/W) may be 0.030 or greater and 0.075 or less, may be 0.035 or greater and 0.075 or less, may be 0.040 or greater and 0.075 or less, may be 0.044 or greater and 0.075 or less, or may be 0.048 or greater and 0.075 or less.

The ratio of the depth D to the width W (D/W) of recesses 45 is obtained by dividing the depth D of recesses 45 for the optical sheet 10 under evaluation determined by the method described above by the width W of recesses 45 for the optical sheet 10 under evaluation determined by the method described above. When the ratio is calculated, the units of the width W of recesses 45 and the depth D of recesses 45 are made consistent. The ratio (D/W) has no unit.

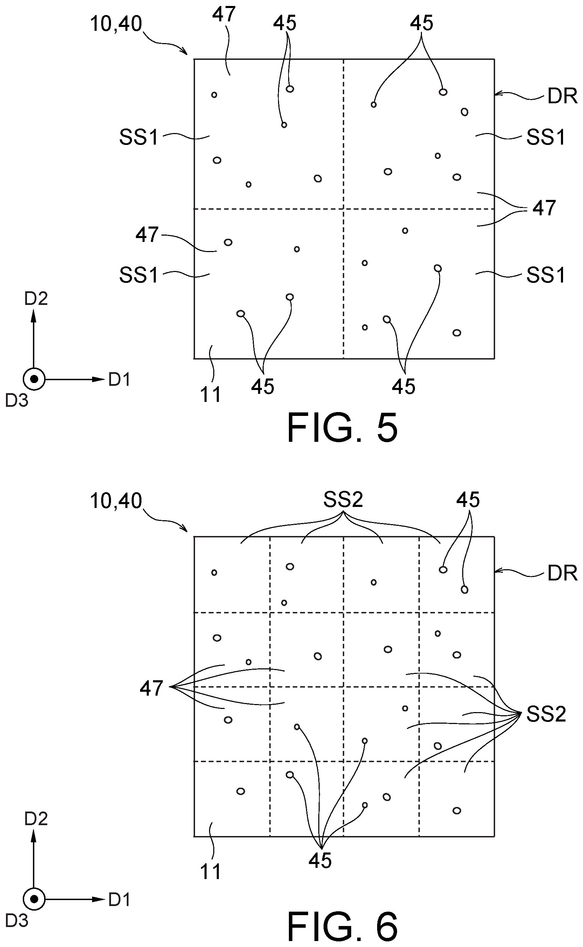

As illustrated in Fig. 5, Fig. 6, and Fig. 12 to Fig. 14, in cases in which the first surface includes multiple recesses 45, the multiple recesses 45 may be discretely positioned. In other words, the multiple recesses 45 may be positioned separate from one another. As illustrated in Fig. 5, Fig. 6, and Fig. 12 to Fig. 14, the first surface 11 may have a flat portion 47 around a recess 45. The first surface 11 may include a flat portion 47 between a recess 45 and a recess 45. The first surface 11 may be composed of a flat portion 47 in a region between a recess 45 and a recess 45. A flat portion 47 is a surface in which the height difference in the direction normal to the optical sheet 10 is smaller than the depth D of recesses 45 of the optical sheet 10.

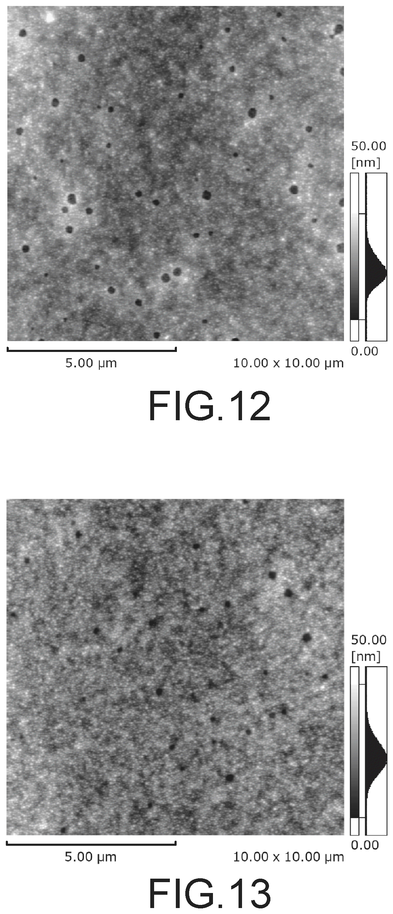

The presence or absence of flat portions 47 is judged based on an observation image acquired using an atomic force microscope. Fig. 12 to Fig. 14 illustrate examples of plan view images acquired using an atomic force microscope for a measurement region. The images presented in Fig. 12 to Fig. 14 are observation images obtained using an atomic force microscope. Points in darker colors in the images indicate points at which height is lower within the measurement region. Points in lighter colors in the images indicate points at which height is higher within the measurement region. In the images presented in Fig. 12 to Fig. 14, the color is expressed by brown. The scale bars at the lower right of the images presented in Fig. 12 to Fig. 14 indicate relationships between color density and height. At the lower right of the images, histograms are presented corresponding to the scale bars. The histograms represent frequency distributions of regions indicated by the colors on the scale bars.

When the inventors examined, it was found that when flat portions 47 are positioned around the recesses 45, lubricity on the first surface 11 of the optical sheet 10 can be improved. Meanwhile, the functional layer 40 exhibits some expected function in the region other than the recesses 45. The flat portions 47 exhibit some expected function. As an example, the functional layer 40 may exhibit a low-reflection function or a reflection-reducing function in flat portions 47 other than the recesses 45.

By allowing the first surface 11 to have flat portions 47 around the recesses 45, occurrence of physical catching at the flat portions 47 can be reduced. An external object that touches and rubs the optical sheet 10 can come into contact with the first surface 11 at the periphery of the recesses 45, that is, the boundaries between the recesses 45 and the flat portions 47. Presumably, rubbing of the object with the first surface 11 at the periphery of the recesses 45 can be encouraged. As a result, by virtue of improved lubricity at the periphery of the recesses 45, abrasion resistance of the optical sheet 10 can be effectively improved.

An upper limit may be set on the proportion of recesses 45 in a 10 $\mu$m $\times$ 10 $\mu$m measurement region of the first surface 11. By setting an upper limit, it can be ensured that the functional layer 40 can sufficiently exhibit its expected function in the optical sheet 10 with improved abrasion resistance. In a 10 $\mu$m $\times$ 10 $\mu$m measurement region of the first surface 11, the proportion of recesses 45 may be 15% or less, may be 12% or less, may be 10% or less, or may be 5.0% or less.

A lower limit may be set on the proportion of recesses 45 in a 10 $\mu$m $\times$ 10 $\mu$m measurement region of the first surface 11. By setting a lower limit, abrasion resistance on the first surface 11 of the optical sheet 10 can be improved in a stable manner. In a 10 $\mu$m $\times$ 10 $\mu$m measurement region of the first surface 11, the proportion of recesses 45 may be 0.50% or more, may be 0.75% or more, may be 1.0% or more, may be 1.5% or more, or may be 2.0% or more.

The proportion of recesses 45 in a measurement region may be 0.50% or more and 15% or less, may be 0.75% or more and 15% or less, may be 1.0% or more and 15% or less, may be 1.5% or more and 15% or less, or may be 2.0% or more and 15% or less. The proportion of recesses 45 in a measurement region may be 0.50% or more and 12% or less, may be 0.75% or more and 12% or less, may be 1.0% or more and 12% or less, may be 1.5% or more and 12% or less, or may be 2.0% or more and 12% or less. The proportion of recesses 45 in a measurement region may be 0.50% or more and 10% or less, may be 0.75% or more and 10% or less, may be 1.0% or more and 10% or less, may be 1.5% or more and 10% or less, or may be 2.0% or more and 10% or less. The proportion of recesses 45 in a measurement region may be 0.50% or more and 5.0% or less, may be 0.75% or more and 5.0% or less, may be 1.0% or more and 5.0% or less, may be 1.5% or more and 5.0% or less, or may be 2.0% or more and 5.0% or less.

The proportion of recesses 45 in a 10 $\mu$m $\times$ 10 $\mu$m measurement region of the first surface 11 is the proportion by area occupied by the recesses 45 in an observation in the direction normal to the optical sheet 10. This proportion is a percentage, and the unit of the proportion is "%." For the proportion, the proportion is calculated based on the aforementioned plan view image of the measurement region used when identifying a recess 45 having the longest maximum length $L_{MAX}$. That is, based on an image acquired using an atomic force microscope and depicting the first surface 11 viewed in the direction normal to the optical sheet 10, the proportion is calculated. The image processing can be performed using ImageJ and Fiji, which are image processing software. ImageJ is open-source, public-domain image processing software initially developed at the National Institutes of Health in the United States. Fiji is a plug-in package for ImageJ.

For the optical sheet 10 according to this embodiment, a lower limit may be set on the number of recesses 45 having a width of 0.1 $\mu$m or more and a depth of 10 nm or more included in a 10 $\mu$m $\times$ 10 $\mu$m square measurement region of the first surface 11. By setting this lower limit, it is ensured that a certain number or more of recesses 45 having a predetermined size are included in one measurement region. In that case, lubricity can be imparted to the first surface 11 in a stable manner, whereby excellent abrasion resistance can be imparted to the first surface 11 in a stable manner. For this reason, the number of recesses 45 having a width of 0.1 $\mu$m or more and a depth of 10 nm or more included in one measurement region may be 3 or more, may be 4 or more, may be 9 or more, may be 11 or more, may be 12 or more, may be 17 or more, or may be 20 or more.

An upper limit may be set on the number of recesses 45 having a width of 0.1 $\mu$m or more and a depth of 10 nm or more included in a 10 $\mu$m $\times$ 10 $\mu$m square measurement region of the first surface 11. By setting this upper limit, it is ensured that only a certain number or fewer of recesses 45 having a predetermined size are included in one measurement region. In that case, too, lubricity of the first surface 11 can be ensured. When too many depressions are formed in the first surface 11, lubricity of the first surface 11 can decrease, for example due to physical catching. For this reason, the number of recesses 45 having a width of 0.1 $\mu$m or more and a depth of 10 nm or more included in one measurement region may be 50 or fewer, may be 40 or fewer, may be 35 or fewer, or may be 32 or fewer.

The number of recesses 45 having a width of 0.1 $\mu$m or more and a depth of 10 nm or more included in one measurement region may be 3 or more and 50 or fewer, may be 4 or more and 50 or fewer, may be 9 or more and 50 or fewer, may be 11 or more and 50 or fewer, may be 12 or more and 50 or fewer, may be 17 or more and 50 or fewer, or may be 20 or more and 50 or fewer. The number of recesses 45 having a width of 0.1 $\mu$m or more and a depth of 10 nm or more included in one measurement region may be 3 or more and 40 or fewer, may be 4 or more and 40 or fewer, may be 9 or more and 40 or fewer, may be 11 or more and 40 or fewer, may be 12 or more and 40 or fewer, may be 17 or more and 40 or fewer, or may be 20 or more and 40 or fewer. The number of recesses 45 having a width of 0.1 $\mu$m or more and a depth of 10 nm or more included in one measurement region may be 3 or more and 35 or fewer, may be 4 or more and 35 or fewer, may be 9 or more and 35 or fewer, may be 11 or more and 35 or fewer, may be 12 or more and 35 or fewer, may be 17 or more and 35 or fewer, or may be 20 or more and 35 or fewer. The number of recesses 45 having a width of 0.1 $\mu$m or more and a depth of 10 nm or more included in one measurement region may be 3 or more and 32 or fewer, may be 4 or more and 32 or fewer, may be 9 or more and 32 or fewer, may be 11 or more and 32 or fewer, may be 12 or more and 32 or fewer, may be 17 or more and 32 or fewer, or may be 20 or more and 32 or fewer.

The number of recesses 45 having a predetermined size included in each measurement region is measured based on the aforementioned image of the measurement region used when identifying a recess 45 having the longest maximum length $L_{MAX}$. That is, based on an image acquired using an atomic force microscope and depicting the first surface 11, the number of recesses 45 having a width of 0.1 $\mu$m or more and a depth of 10 nm or more included in each measurement region is measured. Whether or not the number of recesses 45 having a width of 0.1 $\mu$m or more and a depth of 10 nm or more included in a 10 $\mu$m $\times$ 10 $\mu$m square measurement region of the first surface 11 satisfies a condition is judged based on the average of measured values in five measurement regions for each of three measurement samples, that is, the average of a total of 15 measured values. As in the cases of the width W of recesses 45 and the depth D of recesses 45, however, measurement regions judged not to have a recess 45 having the aforementioned predetermined size present therein are not considered. For example, when 15 measurement regions for a certain optical sheet include two measurement regions in which no recess 45 is present, the arithmetic mean of the measured values in the 13 measurement regions is used as the number of recesses 45 for this optical sheet.

When the inventors examined, it was confirmed that by ensuring that a relatively large number of relatively small recesses 45 are dispersed, abrasion resistance on the first surface 11 can be improved in a stable manner.

Specifically, by allowing a 10 $\mu$m $\times$ 10 $\mu$m square measurement region to include 11 or more recesses 45 having a width of 0.1 $\mu$m or more and 0.8 $\mu$m or less, abrasion resistance can be improved in a stable manner. In this case, the width of the recesses 45 included within the measurement region may be 0.1 $\mu$m or more and 0.6 $\mu$m or less or may be 0.1 $\mu$m or more and less than 0.5 $\mu$m. The number of recesses 45 having a width of 0.1 $\mu$m or more and 0.8 $\mu$m or less included

within the measurement region may be 12 or more, may be 17 or more, or may be 20 or more. The number of recesses 45 having a width of 0.1 μm or more and 0.8 μm or less included within the measurement region may be 50 or fewer, may be 40 or fewer, may be 35 or fewer, or may be 32 or fewer.

For the optical sheet 10 according to this embodiment, as illustrated in Fig. 5, recesses may be included in each of four first subareas SS1 obtained by bisecting a 10 μm × 10 μm square measurement region DR along each side. In this case, the recesses 45 are dispersed within the measurement region DR. As a result, lubricity at different points within the measurement region DR can be improved. Thereby, abrasion resistance can be improved in a stable manner without unevenness within the optical sheet 10.

As illustrated in Fig. 6, recesses 45 may be included in each of nine second subareas SS2 obtained by trisecting a 10 μm × 10 μm square measurement region along each side. In the example illustrated in Fig. 6, abrasion resistance can be improved in a more stable manner without unevenness within the optical sheet 10.

An optical sheet 10 that includes at least one recess having a width of 0.1 μm or more and a depth of 10 nm or more in a 10 μm × 10 μm region of its first surface has excellent abrasion resistance. An optical sheet to which excellent abrasion resistance has been imparted is superior in both steel wool resistance and felt resistance. A known measure representing abrasion resistance on a surface of an optical sheet is pencil hardness. Pencil hardness is an indicator of resistance when a hard object comes into contact under stress approximating a point load. During repeated frictions or prolonged use, however, gently applied surface loads can cause microscopic scratches. A reasonable approach to evaluate resistance to this type of flaw is the use of steel wool resistance and felt resistance. In an abrasion resistance test using steel wool on the first surface 11, the optical sheet 10 may have high resistance. In an abrasion resistance test using felt on the first surface 11, the optical sheet 10 may have high resistance.

When the inventors examined, by allowing a 10 μm × 10 μm region of the first surface to include recesses having a predetermined size, excellent abrasion resistance to felt was successfully imparted to the optical sheet 10 in a stable manner. In the related art, it has been possible to improve pencil hardness and abrasion resistance to steel wool of an optical sheet 10 by adjusting mechanical properties of the sheet, such as surface hardness. Nowadays, abrasion resistance to fingers and input styluses in combination with a touch-screen function and abrasion resistance to wiping, for example with cloth, are also desired for optical sheets. In the related art, however, pencil hardness and steel wool abrasion resistance can admittedly be improved by simply improving mechanical properties, but it has been difficult to ensure excellent abrasion resistance to felt in a stable manner. The inventors believe that advantages such as that excellent abrasion resistance to felt can be ensured in a stable manner by providing a recess having a width of 0.1 μm or more and a depth of 10 nm or more in a 10 μm × 10 μm region of the first surface are significant ones far beyond what is predicted from the technical level.

<Steel Wool Abrasion Resistance>

A steel wool abrasion resistance test is an indicator of resistance to flaws and other defects that occur when steel wool is pressed against the test sample under evaluation and relatively moved. The optical sheet 10 may have resistance to a steel wool abrasion resistance test conducted under the conditions specified below.

The test sample of the optical sheet under evaluation is shaped like a rectangle. The short sides of the rectangular shape are cut to 50 mm, and the long sides are cut to 100 mm. The test sample is visually inspected to confirm the absence of dust, flaws, and other abnormalities. The rectangularly shaped sample is stretched along a level surface so that no crease or warp is formed on the tester. The four corners of the stretched sample are fixed on the tester using mending tape. The mending tape may be trade name "810-3-18," manufactured by 3M Company.

Steel wool as the abrasive material is brought into contact with the surface of the sample formed by the first surface of the optical sheet. The steel wool is "BONSTAR B-204," made of yarn #0000, manufactured by Nippon Steel Wool Co., Ltd. The BONSTAR B-204 used has the following dimensions for industrial use: width, approximately 390 mm; length, approximately 75 mm; thickness, approximately 110 mm. The area of contact between the test sample and the abrasive material is 20 mm × 20 mm. A load of 1000 g is applied to the abrasive material from above in the vertical direction, whereby the abrasive material is pressed against the test sample stretched to fit over a level surface.

With the abrasive material pressed against the test sample from above in the vertical direction, the abrasive material and the sample are relatively moved in the horizontal direction. The abrasive material and the sample are relatively moved in the direction parallel to the direction in which the fibers in the steel wool primarily extend. The relative movements are reciprocating motions along a straight pathway. The number of cycles of the reciprocating motions is 1000. The speed of the reciprocating motions is 80 mm/second. The stroke in the reciprocating motions is 40 mm in both the forward and backward movements. The reciprocating motions are made in the direction parallel to the long sides of the sample.

The testing environment is at a temperature of 23°C ± 2°C and a relative humidity of 50% ± 5%. The test sample is placed in the testing environment for 16 hours before the start of the test.

The abrasive material is an unused one. Before the testing of the subject of evaluation is conducted, pretreatment of the steel wool is conducted by rubbing the steel wool against a preparatory sample. The tester to be used for the testing of the sample under evaluation is also used for the pretreatment of the steel wool. The preparatory sample is a polyethylene terephthalate film. The preparatory sample is shaped like a rectangle measuring 50 mm along the short sides and 100 mm along the long sides. The steel wool is rubbed against an untreated surface of the polyethylene terephthalate film. The preparatory sample is stretched along a level surface, and the four corners of the preparatory sample are fixed on the tester using mending tape. The steel wool is pressed against the preparatory sample from above in the vertical direction. The area of contact between the preparatory sample and the steel wool is 20 mm × 20 mm. The load for pressing the steel wool against the preparatory sample is 300 g. The steel wool pressed against the preparatory sample is relatively moved, in relation to the preparatory sample, in the horizontal direction. The steel wool and the preparatory sample are relatively moved in the direction parallel to the direction in which the fibers in the steel wool primarily extend. The relative movements are reciprocating motions. The number of cycles of the reciprocating motions is 300. The speed of the reciprocating motions is 80 mm/second. The stroke in the reciprocating motions is 40 mm in both the forward and backward movements. The steel wool pressed against the preparatory sample in such a manner is used for the testing of the subject of evaluation.

After the abrasion resistance test, the surface of the test sample formed by the first surface of the optical sheet is visually observed. The observation distance is 30 cm. The illuminance on the surface of the sample under observation is set to 800 Lx or more and 1200 Lx or less.

When a flaw of a severity that poses a problem in application to display devices is observed on the test sample, the optical sheet 10 under evaluation is assessed as lacking resistance to the abrasion resistance test using steel wool on the first surface 11. One optical sheet 10 under evaluation undergoes five runs of the abrasion resistance test. When no flaw of a severity that poses a problem in application to display devices occurs throughout the five runs of the test, the optical sheet 10 under evaluation is judged to have resistance to the abrasion resistance test using steel wool on the first surface 11. During the five runs of the test, the steel wool is replaced each time. The aforementioned pretreatment of the steel wool is conducted before the start of testing in each of the five runs of the test.

<Felt Resistance>

A felt abrasion resistance test is an indicator of resistance to flaws and other defects that occur when felt is pressed against the test sample under evaluation and relatively moved. The optical sheet 10 may have resistance to a felt abrasion resistance test performed under the following conditions using "Jumbo Wearaser® CS-7," manufactured by TABER Industries, as the abrasive material.

The test sample of the optical sheet under evaluation is shaped like a rectangle. The short sides of the rectangular shape are cut to 50 mm, and the long sides are cut to 100 mm. The test sample is visually inspected to confirm the absence of dust, flaws, and other abnormalities. The rectangularly shaped sample is stretched along a level surface so that no crease or warp is formed on the tester. The four corners of the stretched sample are fixed on the tester using mending tape. The mending tape may be trade name "810-3-18," manufactured by 3M Company.

Felt as the abrasive material is brought into contact with the surface of the sample formed by the first surface of the optical sheet. The felt is "Jumbo Wearaser® CS-7," manufactured by TABER Industries. The area of contact between the test sample and the abrasive material is 20 mm × 20 mm. A load of 200 g is applied to the abrasive material from above in the vertical direction, whereby the abrasive material is pressed against the test sample stretched to fit over a level surface.

With the abrasive material pressed against the test sample from above in the vertical direction, the abrasive material and the sample are relatively moved in the horizontal direction. The relative movements are reciprocating motions along a straight pathway. The number of cycles of the reciprocating motions is 10000. The speed of the reciprocating motions is 200 mm/second. The stroke in the reciprocating motions is 50 mm in both the forward and backward movements. The reciprocating motions are made in the direction parallel to the long sides of the sample.

The testing environment is at a temperature of 23°C ± 2°C and a relative humidity of 50% ± 5%. The test sample is placed in the testing environment for 16 hours before the start of the test.

The abrasive material is an unused one. Before the testing of the subject of evaluation is conducted, pretreatment of the felt is conducted by rubbing the felt against a preparatory sample. The tester to be used for the testing of the sample under evaluation is also used for the pretreatment of the felt. The preparatory sample is "One Side Primer Treated type: A4160," manufactured by Toyobo Co., Ltd. The preparatory sample is shaped like a rectangle measuring 50 mm along the short sides and 100 mm along the long sides. The preparatory sample is stretched along a level surface, and the four corners of the surface of the preparatory sample not treated with a primer (the surface on which PET is exposed) are fixed on the tester using mending tape. The felt is rubbed against the untreated surface of the preparatory sample. The felt is pressed against the preparatory sample from above in the vertical direction. The area of contact between the preparatory sample and the felt is a circle having a diameter of 12 mm. The load for pressing the felt against the preparatory sample is 600 g. The felt pressed against the preparatory sample is relatively moved, in relation to the preparatory sample, in the horizontal direction. The relative movements are reciprocating motions. The number of cycles of the reciprocating motions is 150. The speed of the reciprocating motions is 220 mm/second. The stroke in the reciprocating motions is 50 mm in both the forward and backward movements. The felt pressed against the preparatory sample in such a manner is used for the testing of the subject of evaluation. After it is confirmed that the smoothed surface of the pressed felt is free of fuzz and flat, the test is conducted.

After the abrasion resistance test, the surface of the test sample formed by the first surface of the optical sheet is visually observed. The observation distance is 30 cm. The illuminance on the surface of the sample under observation is set to 800 Lx or more and 1200 Lx or less.

When a flaw of a severity that poses a problem in application to display devices is observed on the test sample, the optical sheet 10 under evaluation is assessed as lacking resistance to the abrasion resistance test using CS-7 as the abrasive material on the first surface 11. One optical sheet 10 under evaluation undergoes five runs of the abrasion resistance test. When no flaw of a severity that poses a problem in application to display devices occurs throughout the five runs of the test, the optical sheet 10 under evaluation is judged to have resistance to the abrasion resistance test using CS-7 as the abrasive material on the first surface 11. Throughout the five runs of the test, the identical piece of CS-7 is used. The aforementioned pretreatment of CS-7 is conducted before the start of testing in each of the five runs of the test.

<Arithmetic Mean Roughness Sa>

For the optical sheet 10 according to this embodiment, the arithmetic mean roughness Sa on the first surface 11 may be 8.0 nm or less, may be 7.5 nm or less, may be 5.0 nm or less, may be 4.5 nm or less, or may be 4.1 nm or less. By reducing the arithmetic mean roughness Sa to 8.0 nm or less, excellent lubricity is imparted to the first surface 11. By providing physical irregularities formed by recesses 45 to the first surface 11 while maintaining a low arithmetic mean roughness Sa, lubricity of the first surface 11 is improved, whereby abrasion resistance of the first surface 11 can be improved. There is no particularly preferred lower limit to the arithmetic mean roughness Sa on the first surface 11. The arithmetic mean roughness Sa on the first surface 11 may be 0 nm or more, may be 0.1 nm or more, or may be 3.0 nm or more.

The arithmetic mean roughness Sa is the three-dimensional arithmetic mean roughness as defined in ISO 25178. The three-dimensional arithmetic mean roughness is an extension of the arithmetic mean roughness Ra relating to two-dimensional roughness into three dimensions. The arithmetic mean roughness Sa is calculated according to formula (i) below, with the X- and Y-axes in a Cartesian coordinate system defined on the reference plane and with the roughness curve expressed as Z(x,y) and the dimensions of the reference plane expressed as Lx and Ly. It should be noted that in formula (i), A = Lx × Ly.

[Math. 1]

$$\mathrm{Sa} \;=\; \frac{1}{A}\int_{0}^{Lx}\int_{0}^{Ly}\bigl|Z(x,y)\bigr|dxdy \qquad (i)$$

The arithmetic mean roughness Sa is a value obtained using an atomic force microscope (AFM). From the optical sheet 10 of interest, three measurement samples are cut out at points that are at least 10 mm separated from one another. The size of each measurement sample is a 5 mm × 5 mm square. The measurement samples are visually inspected to confirm the absence of adhering contaminants, flaws, and other abnormalities. For each measurement sample, images of five measurement regions separate from one another are acquired using an atomic force microscope. The measurement regions are 10 $\mu$m × 10 $\mu$m squares. For the five measurement regions for each of the three measurement samples, that is, for a total of 15 measurement points, the arithmetic mean roughness Sa is calculated from the acquired image using surface analysis software attached to the atomic force microscope. The average of the 15 measured values is reported as the arithmetic mean roughness Sa (nm) of the optical sheet.

<Luminous Reflectance>

The optical sheet 10 according to this embodiment has a reflection-reducing function that reduces the reflection of light incident on the first surface 11. The luminous reflectance Y on the first surface 11 as measured at an angle of incidence of 5° may be 1.5% or less, may be 1.0% or less, may be 0.8% or less, may be 0.7% or less, may be 0.6% or less, or may be 0.5% or less.

The lower limit to the luminous reflectance is not particularly specified. The luminous reflectance Y on the first surface 11 as measured at an angle of incidence of 5° may be 0% or more or may be more than 0%.

The luminous reflectance Y refers to the luminous reflectance Y in the CIE 1931 standard colorimetric system. The luminous reflectance Y is measured as described below using a spectrophotometer.

From the optical sheet 10 under evaluation, a sample is cut out. The sample is visually inspected to confirm the absence of dust, flaws, and other abnormalities. To the surface of the sample formed by the second surface of the optical sheet, a black board is attached with an optically transparent adhesive sheet interposed therebetween. The optically transparent adhesive sheet is "PANACLEAN PD-S1," manufactured by Panac Co., Ltd. The black board is "COMOGLAS DFA2CG 502K (black)," manufactured by Kuraray Co., Ltd. The thickness of the black board is 2 mm. The total transmittance of the black board is 1% or less. Through these, evaluation sample A, which includes an optical sheet, an optically transparent adhesive sheet, and a black board, is prepared.

The surface of evaluation sample A formed by the first surface of the optical sheet is irradiated with light at an angle of incidence of 5°. Based on the light specularly reflected from evaluation sample A, the reflectance (luminous reflectance Y) of the evaluation sample is measured. On the basis of specular reflectance measured at 0.5-nm intervals within the range of 300 nm to 780 nm, inclusive, using supplementary illuminant C and a 2-degree field of view, the luminous reflectance Y (%) is determined. Before the measurement of the luminous reflectance Y of the optical sheet 10, the supplementary illuminant C is left on for 15 minutes, whereby the output of the supplementary illuminant C is stabilized. The testing environment during the measurement of the luminous reflectance is at a temperature of 23°C ± 2°C and a relative humidity of 50% ± 5%. The sample is placed in the testing environment for 16 hours before the start of the test.

The other measurement conditions during the measurement of the luminous reflectance shall comply with JIS Z 8722: 2009.

The luminous reflectance is determined as the arithmetic mean of five measured values. The five measured values are measured values measured at five measurement points on the optical sheet under evaluation. The five measurement points are positioned 10 mm or more separated from one another.

<Total Transmittance>

The total transmittance of the optical sheet 10 may be 50% or more, may be 70% or more, may be 80% or more, may be 90% or more, or may be 95% or more. The total transmittance of the optical sheet 10 has no particular upper limit. The total transmittance of the optical sheet 10 may be 100% or less or may be less than 100%.

The measurement of the total transmittance (%) is performed using a D65 light source. Before the total transmittance of the optical sheet 10 is measured, the D65 light source is left on for 15 minutes, whereby the output of the D65 light source is stabilized. The angle of incidence on the sample during the measurement of the total transmittance is 0°. The incident surface for the measurement of the total transmittance is the second surface 12 of the optical sheet 10. The testing environment during the measurement of the total transmittance is at a temperature of 23°C ± 2°C and a relative humidity of 50% ± 5%. The sample is placed in the testing environment for 16 hours before the start of the test. The other measurement conditions during the measurement of the total transmittance shall comply with JIS K7361-1: 1997.

The total transmittance is determined as the arithmetic mean of five measured values. The five measured values are measured values measured at five measurement points on the optical sheet under evaluation. The five measurement points are positioned 10 mm or more separated from one another.

<Transmission Haze>

The transmission haze of the optical sheet 10 may be 1.0% or less, may be 0.5% or less, may be 0.3% or less, or may be 0.2% or less. The transmission haze of the optical sheet 10 has no particular lower limit. The transmission haze of the optical sheet 10 may be 0% or may be more than 0%.

The measurement of the transmission haze (%) is performed using a D65 light source. Before the transmission haze of the optical sheet 10 is measured, the D65 light source is left on for 15 minutes, whereby the output of the D65 light source is stabilized. The angle of incidence on the sample during the measurement of the transmission haze is 0°. The incident surface for the measurement of the transmission haze is the second surface 12 of the optical sheet 10. The testing environment during the measurement of the transmission haze is at a temperature of 23°C ± 2°C and a relative humidity of 50% ± 5%. The sample is placed in the testing environment for 16 hours before the start of the test. The other measurement conditions during the measurement of the transmission haze shall comply with JIS K7136: 2000.

The transmission haze is determined as the arithmetic mean of five measured values. The five measured values are measured values measured at five measurement points on the optical sheet under evaluation. The five measurement points are positioned 10 mm or more separated from one another.

As illustrated in Fig. 1, the optical sheet 10 may include a resin layer 30 positioned between the substrate 20 and the functional layer 40. The resin layer 30 may contain a cured product of a curable resin composition. A resin layer 30 containing a cured product of a curable resin composition has high strength and high hardness. By allowing the functional layer 40 to be placed on and supported by the resin layer 30, abrasion resistance of the first surface 11 can be further improved.

In the following, each layer of the optical sheet 10 illustrated in Fig. 1 will be described in further detail. In the example illustrated in Fig. 1, the substrate 20, the resin layer 30, and the functional layer 40 are stacked in the third direction D3; that is, the third direction D3 is the stacking direction. The substrate 20, the resin layer 30, and the functional layer 40 extend in the first direction D1 and the second direction D2, which are perpendicular to the third direction D3. In the illustrated example, the first direction D1 and the second direction D2 are perpendicular to each other. The third direction D3 is the direction normal to the optical sheet 10. The third direction D3 is also the direction normal to each layer included in the optical sheet 10. For the optical sheet 10 illustrated in Fig. 1, the first surface 11 is formed by the functional layer 40. The second surface 12 is formed by the substrate 20.

It should be noted that in some cases, the optical sheet 10 may further have layers such as an antistatic layer and an antifouling layer, and these layers may be supported by the functional layer 40 to form the first surface 11. These antistatic, antifouling, and other layers are very thin layers. If not, the functional layer 40 cannot effectively exhibit even its reflection-reducing function. Accordingly, even in cases in which layers such as an antistatic layer and an antifouling layer form the first surface 11, abrasion resistance on the first surface 11 is still influenced by the functional layer 40. With a functional layer 40 as described above, therefore, abrasion resistance of the first surface 11 can be significantly improved.

<<Substrate 20>>

The substrate 20 supports the resin layer 30 and the functional layer 40. The substrate 20 may be transparent. Transparent means that total transmittance as defined in JIS K7361-1: 1997 is 50% or more. The total transmittance may be 70% or more, may be 80% or more, or may be 90% or more.

The material for the substrate 20 is not particularly limited; the material for the substrate 20 may be a resin or may be glass. Resins are preferred as they are lightweight and easy to manufacture.

A resin used in the substrate 20 may be a polyolefin resin, such as polyethylene or polypropylene. A resin used in the substrate 20 may be a vinyl resin, such as polyvinyl chloride, polyvinylidene chloride, polyvinyl alcohol, an ethylene-vinyl acetate copolymer, or an ethylene-vinyl alcohol copolymer. A resin used in the substrate 20 may be a polyester resin, such as polyethylene terephthalate, polyethylene naphthalate, or polybutylene terephthalate. A resin used in the substrate 20 may be an acrylic resin, such as polymethyl (meth)acrylate or polyethyl (meth)acrylate. A resin used in the substrate 20 may be a styrene resin, such as polystyrene, may be a polyamide resin, such as nylon 6 or nylon 66, or may be a cellulose resin, such as triacetylcellulose. Examples of resins that can be used in the substrate 20 also include polycarbonate and similar resins, polyimide resins, and cycloolefin resins, which are obtained from cycloolefins, such as norbornene and dicyclopentadiene. The substrate 20 may contain one such resin alone or may contain two or more such resins.

The thickness of a resin substrate 20 is not particularly limited. For handling reasons, the thickness of a resin substrate 20 may be 10 μm or more, may be 20 μm or more, or may be 50 μm or more. The thickness of a resin substrate 20 may be 500 μm or less, may be 400 μm or less, or may be 300 μm or less. The thickness of a resin substrate 20 may be 500 μm or more.

In the application of the optical sheet 10 in foldable uses, the substrate 20 may have flexibility. In that case, the thickness of a resin substrate 20 may be 10 μm or more and 40 μm or less. When the optical sheet 10 is used after being stacked with glass, the thickness of a resin substrate 20 may be 40 μm or more and 100 μm or less for the prevention of shattering of the glass.

The substrate 20 may include a single layer alone or may include multiple layers. The substrate 20 may include a primer layer, such as an adhesion-promoting layer.

<<Functional Layer 40>>

The functional layer 40 contains a binder component 41 and hollow silica particles 43. By virtue of containing hollow silica particles 43, the functional layer 40 has a reduced refractive index. The functional layer 40 can have a refractive index lower than the refractive index of the binder component 41. The refractive index of the functional layer 40 may be lower than the refractive index of the substrate 20. The refractive index of the functional layer 40 may be lower than the refractive index of the layer adjacent to the functional layer 40.

The functional layer 40 can exhibit the function of reducing reflection of incident light in consequence of its refractive index and thickness. The reflection-reducing function provided by the functional layer 40 is based on interference between rays of light reflected at the surfaces of the functional layer 40 on both sides. To make this reflection-reducing function effective, the refractive index of the functional layer 40 may be intermediate between the refractive indices of the two regions adjacent to the functional layer 40 on both sides. The thickness (nm) of the functional layer 40, furthermore, may be approximately 1/4 of the wavelength λ (nm) of the light whose reflection is to be reduced.

From the viewpoint of the reflection-reducing function, the refractive index of the functional layer and the average thickness of the functional layer can be set as follows. The refractive index of the functional layer may be 1.10 or greater, may be 1.20 or greater, may be 1.26 or greater, may be 1.28 or greater, or may be 1.30 or greater. The refractive index of the functional layer may be 1.48 or less, may be 1.45 or less, may be 1.40 or less, may be 1.38 or less, or may be 1.35 or less. The refractive indices used with respect to structural elements constituting the optical sheet are refractive indices for a wavelength of 589.3 nm. The thickness of the functional layer may be 80 nm or more, may be 85 nm or more, or may be 90 nm or more. The thickness of the functional layer may be 150 nm or less, may be 110 nm or less, or may be 105 nm or less.

<Binder Component 41>

The binder component 41 is an element that holds particles. The binder component 41 may function as a binding agent for coating formation. The binder component 41 may hold particles contained in the functional layer 40 to allow the functional layer 40 to maintain its film form. The binder component 41 may contain a resin. The resin contained in the binder component 41 may be a natural resin or may be a synthetic resin. The binder component 41 may cover particles contained in the functional layer 40. The binder component 41 may cover particles contained in the functional layer 40. The binder component 41 may completely encapsulate each particle contained in the functional layer 40 or may leave at least a subset of the particles contained in the functional layer 40 partially exposed.

The binder component 41 may contain a cured product of at least one curable resin composition. The curable resin composition may include one or more of thermosetting resin compositions and ionizing radiation-curable resin compositions. A cured product of a curable resin composition can impart high strength and high hardness to the functional layer 40 and improve abrasion resistance of the first surface 11. Ionizing radiation-curable resin compositions are particularly advantageous from the viewpoint of improving abrasion resistance.

A thermosetting resin composition contains a thermosetting resin. A thermosetting resin composition cures upon heating. Examples of thermosetting resins include acrylic resins, urethane resins, phenolic resins, urea-melamine resins, epoxy resins, unsaturated polyester resins, and silicone resins. A thermosetting resin composition may contain a curing agent.

An ionizing radiation-curable resin composition contains an ionizing radiation-curable compound. An ionizing radiation-curable compound contains an ionizing radiation-curable functional group. Examples of ionizing radiation-curable functional groups include ethylenically unsaturated linking groups, such as a (meth)acryloyl group, a vinyl group, and an allyl group, and an epoxy group and an oxetanyl group. An ionizing radiation-curable compound may contain two or more ionizing radiation-curable functional groups. An ionizing radiation-curable compound may be a compound having an ethylenically unsaturated linking group. An ionizing radiation-curable compound may be a (meth)acrylate compound, which has a (meth)acryloyl group. An ionizing radiation-curable compound may be a siloxane compound, which contains a siloxane linkage.

Hereinafter, a (meth)acrylate compound containing four or more ethylenically unsaturated linking groups is referred to as "polyfunctional (meth)acrylate compound." A (meth)acrylate compound having two or three ethylenically unsaturated linking groups is referred to as "low-functionality (meth)acrylate compound."

The (meth)acrylate compound may be a monomer or may be an oligomer. With ionizing radiation-curable compounds including a low-functionality (meth)acrylate compound, unevenness in shrinkage during curing can be reduced, whereby the surface of the functional layer 40 can be smoothed.

The percentage of the low-functionality (meth)acrylate compound in the ionizing radiation-curable compounds may be 60% by mass or more, may be 80% by mass or more, may be 90% by mass or more, may be 95% by mass or more, or may be 100% by mass. For smoothing an irregular shape of the surface of the functional layer 40 by reducing unevenness in shrinkage during curing, the low-functionality (meth)acrylate compound may be a (meth)acrylate compound containing two ethylenically unsaturated linking groups. When ionizing radiation-curable compounds include a large amount of polyfunctional (meth)acrylate compound, the surface of the functional layer can be smoothed by, as described later, appropriately adjusting the type of solvent and drying conditions.

Among (meth)acrylate compounds, examples of bifunctional (meth)acrylate compounds include isocyanuric acid di(meth)acrylate, ethylene glycol di(meth)acrylate, polyalkylene glycol di(meth)acrylates, such as polyethylene glycol diacrylate and polybutylene glycol di(meth)acrylate, bisphenol A tetraethoxydiacrylate, bisphenol A tetrapropoxydiacrylate, and 1,6-hexanediol diacrylate. Examples of trifunctional (meth)acrylate compounds include trimethylolpropane tri(meth)acrylate, pentaerythritol tri(meth)acrylate, and isocyanuric acid-modified tri(meth)acrylate. Examples of tetrafunctional and higher-functionality polyfunctional (meth)acrylate compounds include pentaerythritol tetra(meth)acrylate, dipentaerythritol hexa(meth)acrylate, and dipentaerythritol tetra(meth)acrylate. The (meth)acrylate compound may be, as described later, a modified one.

Examples of (meth)acrylate oligomers include acrylate polymers, such as urethane (meth)acrylate, epoxy (meth)acrylate, polyester (meth)acrylate, and polyether (meth)acrylate. Urethane (meth)acrylate is obtained through, for example, the reaction of a polyhydric alcohol and an organic diisocyanate with a hydroxy(meth)acrylate. Epoxy (meth)acrylate may be a (meth)acrylate obtained by allowing a trifunctional or higher-functionality aromatic epoxy resin, alicyclic epoxy resin, or aliphatic epoxy resin, for example, and (meth)acrylic acid to react. Epoxy (meth)acrylate may be a (meth)acrylate obtained by allowing a bifunctional or higher-functionality aromatic epoxy resin, alicyclic epoxy resin, or aliphatic epoxy resin, for example, a polybasic acid, and (meth)acrylic acid to react. Epoxy (meth)acrylate may be a (meth)acrylate obtained by allowing a bifunctional or higher-functionality aromatic epoxy resin, alicyclic epoxy resin, or aliphatic epoxy resin, for example, a phenolic compound, and (meth)acrylic acid to react.

The (meth)acrylate compound may have part of its molecular backbone modified for reducing unevenness in shrinkage caused by crosslinking. The (meth)acrylate compound may be modified with, for example, ethylene oxide, propylene oxide, caprolactone, isocyanuric acid, an alkyl, a cyclic alkyl, an aromatic, or bisphenol. From the viewpoint of increasing compatibility with the silica particles and thereby reducing aggregation of the particles, the (meth)acrylate compound may be modified with an alkylene oxide, such as ethylene oxide or propylene oxide. The percentage of the alkylene oxide-modified (meth)acrylate compound in the ionizing radiation-curable compounds may be 60% by mass or more, may be 80% by mass or more, may be 90% by mass or more, may be 95% by mass or more, or may be 100% by mass. The alkylene oxide-modified (meth)acrylate compound may be a low-functionality (meth)acrylate compound or may be a (meth)acrylate compound having two ethylenically unsaturated linking groups.

Examples of alkylene oxide-modified (meth)acrylate compounds having two ethylenically unsaturated linking groups include bisphenol F alkylene oxide-modified di(meth)acrylates, bisphenol A alkylene oxide-modified di(meth)acrylates, isocyanuric acid alkylene oxide-modified di(meth)acrylates, and polyalkylene glycol di(meth)acrylates. The average number of alkylene glycol repeating units contained in a polyalkylene glycol di(meth)acrylate may be from three to five. The alkylene glycols contained in a polyalkylene glycol di(meth)acrylate may be ethylene glycol and/or polyethylene glycol. Examples of alkylene oxide-modified (meth)acrylate compounds having three ethylenically unsaturated linking groups include trimethylolpropane alkylene oxide-modified tri(meth)acrylates and isocyanuric acid alkylene oxide-modified tri(meth)acrylates.

Examples of siloxane compounds include (poly)dimethylsiloxane, (poly)diethylsiloxane, (poly)diphenylsiloxane, (poly)methylphenylsiloxane, alkyl-modified (poly)dimethylsiloxanes, azo-containing (poly)dimethylsiloxanes, dimethyl silicone, phenylmethyl silicone, alkyl-aralkyl-modified silicones, fluorosilicones, polyether-modified silicones, aliphatic acid ester-modified silicones, methyl hydrogen silicone, silanol-containing silicones, alkoxy-containing silicones, phenol-containing silicones, methacrylic-modified silicones, acrylic-modified silicones, amino-modified silicones, carboxylic acid-modified silicones, carbinol-modified silicones, epoxy-modified silicones, mercapto-modified silicones, fluorine-modified silicones, and polyether-modified silicones.

One ionizing radiation-curable compound may be used alone, or two or more ionizing radiation-curable compounds may be used in combination.

When the ionizing radiation-curable compound is an ultraviolet-curable compound, the curable resin composition forming the binder component 41 may contain additives such as at least one photoinitiator and at least one photoaccelerator. The photoinitiator can be, for example, one or more selected from compounds such as acetophenone, benzophenone, $\alpha$-hydroxyalkylphenones, Michler's ketone, benzoin, benzyl dimethyl ketal, benzoyl benzoate, $\alpha$-acyl oxime esters, $\alpha$-aminoalkylphenones, and thioxanthones. Photoaccelerators accelerate the curing rate by mitigating polymerization inhibition by air during curing. The photoaccelerator can be, for example, one or more selected from compounds such as isoamyl p-dimethylaminobenzoate and ethyl p-dimethylaminobenzoate.

<Particles (hollow silica particles 43 and solid silica particles 44)>

In addition to the binder component 41, the functional layer 40 contains hollow silica particles 43. The functional layer 40 may contain additional particles. Examples of additional particles include inorganic particles, such as magnesium fluoride particles, and organic particles.

The functional layer 40 contains hollow silica particles 43 as silica particles. The hollow silica particles 43 have a shell layer formed of silica. For the hollow silica particles 43, the interior of the particles enclosed by the shell layer is a cavity. Air may be contained inside the cavity. By virtue of containing an internal cavity, the hollow silica particles 43 have a refractive index lower than the refractive index of silica. The refractive index of the hollow silica particles 43 decreases with increasing volume of the internal cavity. The hollow silica particles 43 reduce the overall refractive index of the functional layer 40. By using hollow silica particles 43 having an increased proportion of internal space and a large particle diameter, the refractive index of the functional layer 40 can be further reduced.

The hollow silica particles 43 may uniformly disperse within the functional layer 40. By allowing the hollow silica particles 43 to uniformly disperse within the functional layer 40, the first surface 11 is smoothed, whereby the arithmetic mean roughness Sa of the first surface 11 can be reduced. As a result, lubricity of the first surface 11 is improved, and abrasion resistance of the first surface 11 improves. By taking measures such as reducing variations in particle diameter among the hollow silica particles 43, adjusting the average particle diameter of the hollow silica particles 43 relative to the average film thickness of the binder component 41, adjusting compatibility between the hollow silica particles 43 and the binder component 41, adjusting the ratio between the amounts of the hollow silica particles 43 and the other particles and the ratio between their average particle diameters, and adjusting compatibility between the hollow silica particles 43 and the other particles, the hollow silica particles 43 can be uniformly dispersed within the functional layer 40.

As illustrated in Fig. 1, the functional layer 40 may contain solid silica particles 44 in addition to the hollow silica particles 43. The solid silica particles 44 are nonhollow silica particles. The solid silica particles 44 are particles having no internal cavity. The solid silica particles 44 may be silica particles that are solid. The solid silica particles improve abrasion resistance of the functional layer 40 by dispersing in the binder component 41.

The solid silica particles 44 may uniformly disperse within the functional layer 40 together with the hollow silica particles 43. By allowing the solid silica particles 44 to uniformly disperse within the functional layer 40 together with the hollow silica particles 43, the first surface 11 is smoothed, whereby the arithmetic mean roughness Sa of the first surface 11 can be reduced. As a result, lubricity of the first surface 11 is improved, and abrasion resistance of the first surface 11 improves. By taking measures such as adjusting the ratio between the amounts of the solid silica particles 44 and the other particles, such as the hollow silica particles 43, and the ratio between their average particle diameters and adjusting compatibility between the solid silica particles 44 and the other particles, such as the hollow silica particles 43, the solid silica particles 44 can be uniformly dispersed within the functional layer 40 together with the hollow silica particles 43. In the example illustrated in Fig. 1, the hollow silica particles 43 and the solid silica particles 44 are in uniform dispersion within the functional layer 40.

The functional layer 40 may contain metal oxide particles other than silica particles. The metal oxide particles other than silica particles enhance strength and hardness of the functional layer 40, thereby improving abrasion resistance of the first surface 11. An example of metal oxide particles is an oxide of any of titanium, tantalum, zirconium, chromium, niobium, cerium, hafnium, or yttrium or a mixture of such oxides.

The metal oxide particles may include alumina particles. Alumina particles have a relatively low refractive index among metal oxides. Alumina is a type of aluminum oxide represented by $Al_2O_3$, and its known forms include $\alpha$-form, $\gamma$-form, $\sigma$-form, and mixtures thereof. The alumina particles may be modified alumina particles, which have a modified surface. Examples of modified alumina particles include (meth)acrylic-modified alumina particles and silicone-modified alumina particles. The metal oxide particles may be hollow particles, which have an internal space, or may be solid particles, which have no internal space.

The shape of the particles dispersed within the functional layer 40, such as the hollow silica particles 43 and the solid silica particles 44, is not particularly limited. The shape of the particles dispersed within the functional layer 40, such as the hollow silica particles 43 and the solid silica particles 44, may be perfectly spherical, spheroidal, substantially spherical, such as a polyhedral shape that can be approximated to a sphere, rod-like, sheet-like, fibrous, or irregular. By making the shape of the particles dispersed within the functional layer 40, such as the hollow silica particles 43 and the solid silica particles 44, perfectly spherical, spheroidal, or substantially spherical, lubricity of the first surface 11 is improved. As a result, abrasion resistance of the first surface 11 improves.

The particles dispersed within the functional layer 40, such as the hollow silica particles 43 and the solid silica particles 44, may have a surface coated with at least one silane coupling agent. The silane coupling agent may contain a (meth)acryloyl group or an epoxy group. By applying a surface treatment with a silane coupling agent to the particles, compatibility between the particles and the binder component is improved, and the likelihood of particle aggregation is reduced. As a result, the particles more uniformly disperse within the binder component.

Examples of silane coupling agents include 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, N-2-(aminoethyl)-3-aminopropylmethyldimethoxysilane, N-2-(aminoethyl)-3-aminopropyltrimethoxysilane, 3-aminopropyltrimethoxysilane, 3-aminopropyltriethoxysilane, 3-triethoxysilyl-N-(1,3-dimethyl-butylidene)propylamine, N-phenyl-3-aminopropyltrimethoxysilane, tris-(trimethoxysilylpropyl) isocyanurate, 3-mercaptopropylmethyldimethoxysilane, 3-mercaptopropyltrimethoxysilane, 3-isocyanatopropyltriethoxysilane, methyltrimethoxysilane, dimethyldimethoxysilane, phenyltrimethoxysilane, methyltriethoxysilane, dimethyldiethoxysilane, phenyltriethoxysilane, n-propyltrimethoxysilane, n-propyltriethoxysilane, hexyltrimethoxysilane, hexyltriethoxysilane, octyltriethoxysilane, decyltrimethoxysilane, 1,6-bis(trimethoxysilyl)hexane, trifluoropropyltrimethoxysilane, vinyltrimethoxysilane, and vinyltriethoxysilane. In particular, the silane coupling agent may be one or more selected from 3-methacryloxypropylmethyldimethoxysilane, 3-methacryloxypropyltrimethoxysilane, 3-methacryloxypropylmethyldiethoxysilane, and 3-methacryloxypropyltriethoxysilane.

As illustrated in Fig. 1, the particles contained in the functional layer 40, such as the hollow silica particles 43 and the solid silica particles 44, may be present at a high concentration within the functional layer 40 and uniformly dispersed within the functional layer 40. In such a configuration, as mentioned above, the first surface 11 becomes smoother, and the dynamic coefficient of friction of the first surface 11 decreases. Thereby, abrasion resistance of the first surface 11 can be improved. As illustrated in Fig. 1, hollow silica particles 43 having a large average particle diameter are uniformly dispersed within the functional layer 40. The solid silica particles 44 are dispersed within the functional layer 40 such that they fill gaps between the hollow silica particles 43. The solid silica particles 44 are positioned in proximity to the hollow silica particles 43 within the functional layer 40.

In the example illustrated in Fig. 1, hollow silica particles 43 having a larger average particle diameter are uniformly dispersed within the functional layer 40, and solid silica particles 44 having a smaller average particle diameter are packed within the functional layer 40 in such a manner as to fill gaps between the hollow silica particles 43. In this example, the functional layer 40 has high hardness, and the surface of the functional layer 40 is smooth. As a result, the arithmetic mean roughness Sa on the first surface 11 and the dynamic coefficient of friction on the first surface 11 decrease, and abrasion resistance of the first surface 11 can improve.

The average particle diameter of the hollow silica particles 43 may be 50 nm or more or may be 65 nm or more. The average particle diameter of the hollow silica particles 43 may be 100 nm or less or may be 80 nm or less.

The average particle diameter of the solid silica particles 44 may be 5 nm or more or may be 10 nm or more. The average particle diameter of the solid silica particles 44 may be 20 nm or less or may be 15 nm or less. The average particle diameter of the solid silica particles 44 may be smaller than the average particle diameter of the hollow silica particles 43.

By setting a lower limit to the average particle diameter of the solid silica particles 44, it can be ensured that the solid silica particles 44 can contribute to reinforcing strength and hardness of the functional layer 40. By setting an upper limit to the average particle diameter of the hollow silica particles 43, stable retention of the hollow silica particles 43 by the binder component 41 can be achieved. In other words, detachment of the hollow silica particles 43 from the functional layer 40 can be reduced, whereby abrasion resistance can be improved. By setting an upper limit to the average particle diameter of the solid silica particles 44 and setting a lower limit for the hollow silica particles 43, the solid silica particles 44 can be placed in proximity to hollow silica particles 43 having a large average particle diameter. In other words, the hollow silica particles 43 and the solid silica particles 44 can be uniformly dispersed at a high concentration within the functional layer 40. Thereby, consistently excellent abrasion resistance can be imparted to the functional layer 40 and the optical sheet 10.

An "average particle diameter" used with respect to particles such as the hollow silica particles 43 and the solid silica particles 44 is defined as a value determined through the following (1) to (3).

(1) A cross-section of the optical sheet including the particles is observed using a transmission electron microscope (TEM), and an observation image is acquired through imaging.

(2) Any ten particles are selected from the observation image, and the particle diameter of each particle is measured. When a particle observed in the image is sandwiched between two parallel straight lines, there exists a combination of two straight lines with which the distance between the two straight lines reaches a maximum. The particle diameter (nm) is defined as the distance between the straight lines in this combination. That is, the particle diameter is the maximum length of the particle in the observation image.

(3) The operations in (1) and (2) above are performed five times for the identical optical sheet under measurement, whereby particle diameters of a total of 50 particles are measured. The average of a total of 50 measured particle diameters is reported as the average particle diameter (nm) of the particles.

The "average thickness" of the functional layer 40 is defined as a value determined through the following (4) to (6).

(4) A cross-section of the optical sheet including the functional layer is imaged using a transmission electron microscope (TEM).

(5) In the image obtained, the thickness of the functional layer at the midpoint in the direction along the sheet plane of the optical sheet and the thicknesses of the functional layer at the points 100 nm away from this midpoint on both sides in the direction along the sheet plane of the optical sheet are measured. The thickness is defined as the length (nm) of the functional layer in the direction perpendicular to the sheet plane of the optical sheet.

(6) The operations in (4) and (5) above are performed five times for the identical optical sheet under measurement, whereby the thickness of the functional layer is measured at a total of 15 points. The average of a total of 15 measured thicknesses is reported as the average thickness (nm) of the functional layer.

The average particle diameters of the particles and the thickness of the functional layer can be measured using H-7650 electron microscope, manufactured by Hitachi High-Technologies Corporation, which is a scanning transmission electron microscope (STEM), a type of transmission electron microscope.

As the amount of the hollow silica particles 43 increases, the refractive index of the functional layer 40 decreases, allowing the functional layer 40 to exhibit an excellent reflection-reducing function. A lower limit, therefore, may be set on the amount of the hollow silica particles 43 from the viewpoint of the reflection-reducing function of the functional layer 40. By setting a lower limit on the amount of the particles other than the hollow silica particles 43, smoothness, strength, and hardness of the functional layer 40 can be ensured. By setting a lower limit on the amount of the binder component 41, stable retention of the particles by the binder component 41 can be achieved. Thereby, detachment of the particles can be reduced, whereby excellent abrasion resistance can be ensured. By setting an upper limit on the amount of the binder component 41, it can be ensured that the refractive index of the functional layer 40 decreases, allowing the functional layer 40 to exhibit an excellent reflection-reducing function. By setting an upper limit on the amount of each group of particles, significant aggregation of the particles can be reduced.

The amount of the hollow silica particles may be 100 parts by mass or more, may be 150 parts by mass or more, or may be 175 parts by mass or more, per 100 parts by mass of the binder component. The amount of the hollow silica particles may be 400 parts by mass or less, may be 300 parts by mass or less, or may be 250 parts by mass or less, per 100 parts by mass of the binder component.

The amount of the solid silica particles may be 10 parts by mass or more, may be 50 parts by mass or more, may be 70 parts by mass or more, or may be 100 parts by mass or more, per 100 parts by mass of the binder component. The amount of the solid silica particles may be 200 parts by mass or less, may be 150 parts by mass or less, or may be 100 parts by mass or less, per 100 parts by mass of the binder component.

The amount of the solid silica particles may be 30 parts by mass or more, may be 35 parts by mass or more, or may be 40 parts by mass or more, per 100 parts by mass of the hollow silica particles. The amount of the solid silica particles may be 80 parts by mass or less, may be 75 parts by mass or less, or may be 70 parts by mass or less, per 100 parts by mass of the hollow silica particles.

<Functional Layer 40 Production Method>

The functional layer 40 may be produced using a coating solution containing a curable resin composition and the particles. By subjecting a coating of the coating solution to curing treatment, the functional layer 40 may be obtained. The functional layer coating solution, which is for producing the functional layer 40, may contain additives, such as an antistatic agent, an antioxidant, a surfactant, a dispersant, and an ultraviolet absorber.

The functional layer coating solution contains at least one leveling agent. The leveling agent is an additive that smooths the surface of the functional layer 40. The leveling agent reduces cissing, cratering, pinholes, orange peel, and other defects resulting from nonuniform surface tension of the functional layer 40. By allowing the functional layer coating solution to contain a leveling agent, formation of a Bénard cell structure on the surface of the functional layer can be reduced. When a coating formed by the applied functional layer coating solution is dried, a difference in surface tension between the front surface and the inner surface of the coating, for example, is created within the coating, whereby many instances of convection are induced within the coating. The structure resulting from this type of convection is referred to as a Bénard cell structure and can cause orange peel-like defects to occur on the surface of the functional layer. By using a leveling agent, nonuniformity in surface tension can be reduced, whereby formation of a Bénard cell structure can be reduced.

The leveling agent contained in the functional layer coating solution is not particularly limited. Examples of leveling agents include compounds having a polyether group, a polyurethane group, an epoxy group, a carboxyl group, an acrylate group, a methacrylate group, a carbinol group, or a hydroxy group. Such leveling agents may have a polyether group, a polyurethane group, an epoxy group, a carboxyl group, an acrylate group, a methacrylate group, a carbinol group, or a hydroxy group at the end(s) (one end or both ends) of the backbone, may have it at a side chain, or may have it at both the end(s) of the backbone and a side chain. The leveling agent is not particularly limited as long as it is a compound having a polyether group, a polyurethane group, an epoxy group, a carboxyl group, an acrylate group, a methacrylate group, a carbinol group, or a hydroxy group. Examples of leveling agents include silicone, fluorine, silicone-fluorine, acrylic, methacrylic, vinyl, and aromatic leveling agents. From the viewpoint of reducing cissing and other coating flaws, the functional layer coating solution may contain a fluorine leveling agent or a silicone leveling agent. From the viewpoint of, for example, improving recoatability, the functional layer coating solution may contain an acrylic leveling agent or a vinyl leveling agent.

As mentioned above, as a result of formation of recesses 45 in the first surface 11, abrasion resistance of the first surface 11 improves. Presumably, the recesses 45 in the first surface 11 can be formed as a result of bleeding out of a leveling agent. According to experimental results, by allowing the functional layer coating solution to contain two or more leveling agents, formation of recesses 45 in the first surface 11 was successfully encouraged. In particular, by allowing the functional layer coating solution to contain two or more of a fluorine leveling agent, a silicone leveling agent, and a silicone-fluorine leveling agent, formation of recesses 45 in the first surface 11 was successfully encouraged. Although details are unclear, the likelihood of formation of recesses 45 in the first surface 11 increased when two or more leveling agents were used. In particular, when both a fluorine leveling agent and a silicone-fluorine leveling agent were used, the likelihood of formation of recesses 45 in the first surface 11 increased.

By the amount of the leveling agent, too, formation of recesses 45 in the first surface 11 can be encouraged. By increasing the amount of the leveling agent relative to the binder component 41, formation of recesses 45 in the first surface 11 can be encouraged. When the amount of the leveling agent relative to the binder component 41 is excessively increased, the width and depth of the recesses 45 are too large, and too many recesses 45 are formed. For these reasons, the amount of the leveling agent may be 1 part by mass or more, may be 2 parts by mass or more, may be 5 parts by mass or more, or may be 8 parts by mass or more, per 100 parts by mass of the binder component. The amount of the leveling agent may be 45 parts by mass or less, may be 40 parts by mass or less, may be 35 parts by mass or less, or may be 20 parts by mass or less, per 100 parts by mass of the binder component. Furthermore, by reducing the amount of the particles relative to the binder component 41, too, the likelihood of formation of recesses 45 in the first surface 11 is increased. Specifically, by determining the amounts of the particles relative to the binder component 41 as specified above, the likelihood of formation of recesses 45 in the first surface 11 is increased.

When the leveling agent includes both a fluorine leveling agent and a silicone-fluorine leveling agent, the amount of each leveling agent may be set as follows from the viewpoint of encouraging formation of recesses in the first surface 11. The amount of the fluorine leveling agent may be 5 parts by mass or more, may be 8 parts by mass or more, or may be 10 parts by mass or more, per 100 parts by mass of the binder component. The amount of the fluorine leveling agent may be 40 parts by mass or less, may be 35 parts by mass or less, or may be 30 parts by mass or less, per 100 parts by mass of the binder component. The amount of the silicone-fluorine leveling agent may be 5 parts by mass or more, may be 8 parts by mass or more, or may be 10 parts by mass or more, per 100 parts by mass of the fluorine leveling agent. The amount of the silicone-fluorine leveling agent may be less than 100 parts by mass, may be 35 parts by mass or less, may be 30 parts by mass or less, or may be 25 parts by mass or less, per 100 parts by mass of the fluorine leveling agent.

<<Resin Layer 30 (hard-coat layer)>>

The optical sheet 10 may include a resin layer 30 between the substrate 20 and the functional layer 40. The resin layer 30 may be adjacent to the functional layer 40 in the third direction D3. The resin layer 30 contains a cured product of at least one curable resin composition. The curable resin composition may include one or more of thermosetting resin compositions and ionizing radiation-curable resin compositions. The curable resin composition may contain one or more of thermosetting resins and ionizing radiation-curable compounds. The resin layer 30 may be a hard-coat layer. The resin layer 30 can impart high strength and high hardness to the optical sheet 10 and the first surface 11 and improve abrasion resistance of the first surface 11. The curable resin composition used to form the resin layer 30 may be identical to the curable resin composition for forming the functional layer 40. The curable resin composition used to form the resin layer 30 may contain a cured product of a thermosetting resin or an ionizing radiation-curable compound contained in the curable resin composition for forming the functional layer 40.

The thickness of the resin layer 30 may be 0.1 μm or more, may be 0.5 μm or more, or may be 1 μm or more. The thickness of the resin layer 30 may be 100 μm or less, may be 20 μm or less, or may be 10 μm or less. By setting the thickness of the resin layer 30 in such a manner, development of cracks during processing, such as cutting, of the optical sheet 10 can be reduced while ensuring excellent abrasion resistance.

The refractive index of the resin layer 30 may be lower than the refractive index of the functional layer 40 for the reflection-reducing function provided by the functional layer 40. The refractive index of the resin layer 30 may be set to 1.45 or greater and 1.70 or less.

When the optical sheet 10 includes a high-refractive-index layer as described later, the refractive index of the resin layer 30 may be lower than the refractive index of the high-refractive-index layer. In that case, the refractive index of the resin layer 30 may be 1.50 or greater or may be 1.55 or greater. In that case, the refractive index of the resin layer 30 may be 1.65 or less or may be 1.60 or less. By setting the refractive index of the resin layer 30 in such a manner, it can be ensured that the resin layer 30 functions as a medium-refractive-index layer. An interference effect among the three layers of the resin layer 30 as a medium-refractive-index layer, the high-refractive-index layer, and the functional layer 40 as a low-refractive-index layer becomes possible, whereby reflectance can be further reduced. The refractive index of the resin layer 30 can be adjusted by the resin(s) and particles contained in the curable resin composition.

The refractive indices are values determined through fitting of a reflection spectrum measured using a reflection photometer to a reflection spectrum calculated from an optical model of a multilayer thin film using Fresnel coefficients.

The resin layer 30 may be produced using a coating solution containing the curable resin composition. By subjecting a coating of the coating solution to curing treatment, the resin layer 30 may be obtained. In that case, the resin layer coating solution, which is for producing the resin layer 30, may contain additives that can be used in the functional layer coating solution. That is, the resin layer coating solution may contain a photoinitiator and a photoaccelerator. The resin layer coating solution may contain a leveling agent.

<<Second Functional Layer 50 (high-refractive-index layer)>>

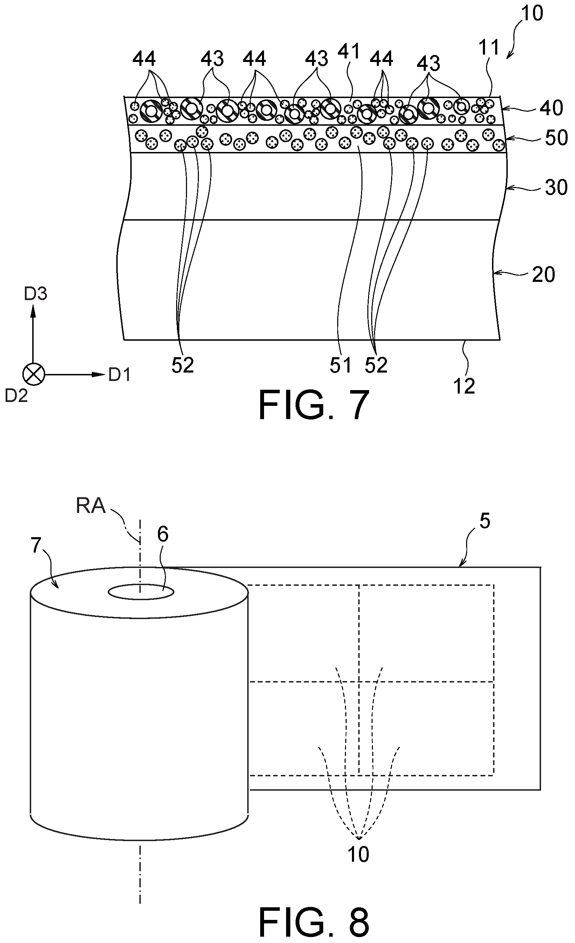

As illustrated in Fig. 7, the optical sheet 10 may further include a second functional layer 50. The second functional layer 50 is positioned between the functional layer 40 and the resin layer 30 in the third direction D3, which is the stacking direction. The second functional layer 50 may be adjacent to the functional layer 40 in the third direction D3. As described immediately above, the second functional layer 50 is configured as a layer having a higher refractive index than the resin layer 30 and the functional layer 40 and fortifies the reflection-reducing function of the optical sheet 10.

From the viewpoint of the reflection-reducing function, the refractive index of the second functional layer and the average thickness of the second functional layer can be set as follows. The refractive index of the second functional layer may be 1.55 or greater or may be 1.56 or greater. The refractive index of the second functional layer may be 1.85 or less or may be 1.75 or less. The thickness of the second functional layer may be 50 nm or more. The thickness of the second functional layer may be 200 nm or less or may be 180 nm or less.

As illustrated in Fig. 7, the second functional layer 50 may contain a binder resin 51 and particles 52. The particles 52 are particles for adjusting the refractive index and may have an average particle diameter on the order of nanometers. The binder resin 51 can be produced using at least one curable resin composition, like the binder component 41 as a resin in the functional layer 40. The curable resin composition may include one or more of thermosetting resin compositions and ionizing radiation-curable resin compositions. The curable resin composition may contain one or more of thermosetting resins and ionizing radiation-curable compounds. The thermosetting resin(s) and ionizing radiation-curable compound(s) used to form the second functional layer 50 may be identical to the thermosetting resin(s) and ionizing radiation-curable compound(s) used to form the functional layer 40.

The particles 52 may be particles having a refractive index higher than the refractive index of the binder resin 51. Examples of particles 52 include antimony pentoxide, zinc oxide, titanium oxide, cerium oxide, tin-doped indium oxide, antimony-doped tin oxide, yttrium oxide, and zirconium oxide. Zirconium oxide, antimony pentoxide, and titanium oxide can impart high strength and high hardness to the second functional layer 50 and contribute to improving abrasion resistance of the first surface 11.

The average particle diameter of the particles 52 may be 5 nm or more or may be 10 nm or more. The average particle diameter of the particles 52 may be 200 nm or less, may be 100 nm or less, or may be 80 nm or less. The amount of the particles 52 can be set from the viewpoint of increasing the refractive index of the second functional layer 50 and high strength of the second functional layer 50. The amount of the particles 52 may be 100 parts by mass or more, may be 300 parts by mass or more, or may be 500 parts by mass or more, per 100 parts by mass of the binder resin 51. The amount of the particles 52 may be 2500 parts by mass or less, may be 2200 parts by mass or less, or may be 2000 parts by mass or less, per 100 parts by mass of the binder resin 51.

The second functional layer 50 may be produced using a coating solution containing a curable resin composition and the particles 52. By subjecting a coating of the coating solution to curing treatment, the second functional layer 50 may be obtained. In that case, the second functional layer coating solution, which is for producing the second functional layer 50, may contain additives that can be used in the functional layer coating solution. That is, the second functional layer coating solution may contain a photoinitiator and a photoaccelerator. The second functional layer coating solution may contain, for example, an antistatic agent, an antioxidant, a surfactant, a dispersant, an ultraviolet absorber, and a leveling agent.

<<Optical Sheet Manufacturing Method>>

A resin layer 30, a functional layer 40, and a second functional layer 50 included in an optical sheet 10 can be produced by the wet process, in which coating solutions containing the components constituting the respective layers 30, 40, and 50 are applied onto a substrate 20, dried, and cured. The coating solutions may contain a solvent in addition to the resin compositions and particles used to form the respective layers. The resin compositions may contain solid components constituting the respective layers and additives, such as a polymerization initiator.

An optical sheet 10 including a substrate 20 and a functional layer 40 can be produced as follows. First, a functional layer coating solution, which is for forming the functional layer 40, is prepared. Then the functional layer coating solution is applied onto the substrate 20, whereby a coating is formed. Thereafter, the coating is dried, and then the coating is cured. As a result, a functional layer 40 is produced on the substrate 20, whereby the optical sheet 10 is obtained.

When the optical sheet 10 includes a resin layer 30 in addition to the functional layer 40, the resin layer 30 is produced on the substrate 20 before producing the functional layer 40. By applying a resin layer coating solution, which is for forming the resin layer 30, onto the substrate 20 and drying and curing the coating, the resin layer 30 is obtained. Then, by producing the functional layer 40 on the resin layer 30, the optical sheet 10 is obtained. It should be noted that the resin layer 30 may be produced in an uncured or semi-cured state on the substrate 20, and the resin layer 30 may be completely cured together with the functional layer 40 when curing the functional layer 40.

When the optical sheet 10 includes a second functional layer 50 in addition to the resin layer 30 and the functional layer 40, the second functional layer 50 is produced on the resin layer 30 after producing the resin layer 30 and before producing the functional layer 40. By applying a second functional layer coating solution, which is for forming the second functional layer 50, onto the resin layer 30 and drying and curing the coating, the second functional layer 50 is obtained. Then, by producing the functional layer 40 on the second functional layer 50, the optical sheet 10 is obtained. It should be noted that one or more of the resin layer 30 and the second functional layer 50 may be produced in an uncured or semi-cured state, and the one or more of the resin layer 30 and the second functional layer 50 may be completely cured together with the functional layer 40 when curing the functional layer 40.

By allowing the coating solutions to contain at least one solvent, viscosity of the coating solutions can be adjusted, and the individual components can be dissolved or dispersed within the coating solutions. The solvent may be, for example, one or more of solvents such as ketones (e.g., acetone, methyl ethyl ketone, methyl isobutyl ketone, and cyclohexanone), ethers (e.g., dioxane and tetrahydrofuran), aliphatic hydrocarbons (e.g., hexane), alicyclic hydrocarbons (e.g., cyclohexane), aromatic hydrocarbons (e.g., toluene and xylene), halogenated hydrocarbons (e.g., dichloromethane and dichloroethane), esters (e.g., methyl acetate, ethyl acetate, and butyl acetate), alcohols (e.g., butanol and cyclohexanol), cellosolves (e.g., methyl cellosolve and ethyl cellosolve), cellosolve acetates, sulfoxides (e.g., dimethylsulfoxide), glycol ethers (e.g., 1-methoxy-2-propyl acetate), and amides (e.g., dimethylformamide and dimethylacetamide).

When volatilization of the solvent is too early, irregularities in the functional layer 40 are large, and the formation of recesses 45 is also difficult. The inventors believe that a factor in causing this is the failure of the leveling agent to migrate sufficiently to the vicinity of the surface within the coating of the coating solution due to too early volatilization of the solvent. By reducing the rate of volatilization of the solvent, however, it can be ensured that irregularities in the functional layer 40 are small, and that recesses 45 are also easily formed. For this reason, the coating solutions may contain a solvent having a slow evaporation rate.

When volatilization of the solvent is too rapid, the solvent actively circulates by convection during drying of the coating solution. The particles contained in the coating solution, such as hollow silica particles 43, solid silica particles 44, metal oxide particles, or particles 52, can become unevenly distributed due to convection caused by volatilization of the solvent during drying of the coating solution. In other words, the particles within the coating no longer uniformly disperse. For this reason, too, the coating solutions may contain a solvent having a slow evaporation rate.

The relative evaporation rate of a solvent contained in a coating solution may be 70 or less or may be 30 or greater and 60 or less. The relative evaporation rate is the evaporation rate of the solvent of interest expressed as a comparison to the evaporation rate of n-butyl acetate, with the evaporation rate of n-butyl acetate as 100. As an example, the relative evaporation rate of isobutyl alcohol is 64. The relative evaporation rate of 1-butanol is 47. The relative evaporation rate of 1-methoxy-2-propyl acetate is 44. The relative evaporation rate of ethyl cellosolve is 38. The relative evaporation rate of cyclohexanone is 32.

The percentage of the solvent having a relative evaporation rate of 70 or less may be 10% by mass or more and 50% by mass or less or may be 20% by mass or more and 40% by mass or less of all solvents. In that case, a solvent superior in resin solubility may be contained in the coating solution as a solvent other than the solvent having a relative evaporation rate of 70 or less. The relative evaporation rate of the solvent superior in resin solubility may be 100 or greater.

From the viewpoint of reducing solvent circulation by convection during drying of the coating solutions, the drying temperatures during drying of the coating solutions may be lowered, whereby the drying rates may be slowed down. In particular, the drying temperature during drying of the functional layer coating solution may be lowered. The drying temperatures for the coatings formed by the applied coating solutions can be set as appropriate in view of factors such as the formation of recesses 45, the types of solvents, dispersibility of particles, and the production speed.

As can be seen from the foregoing, by adjusting the types and proportions of solvents and drying conditions for coatings, the presence or absence of recesses 45 in the first surface 11, the size of the recesses 45, and the number of recesses 45 can be controlled. By adjusting the types and proportions of solvents and drying conditions for coatings, dispersion of particles, such as hollow silica particles 43 and solid silica particles 44, within the functional layer 40 can be controlled.

Examples of means for curing the coatings for forming the respective layers include irradiation with ionizing radiation, such as ultraviolet radiation or an electron beam, and heating. Curing treatment through irradiation with ionizing radiation is superior in productivity because it allows the coatings to be cured in a short time.

With this optical sheet 10 manufacturing method using the wet process, a long sheet article 5 including a large number of optical sheets 10 as illustrated in Fig. 8 can be manufactured. By cutting the long sheet article 5 into a predetermined size, optical sheets 10 are obtained. In this case, optical sheets 10 having various dimensions can be obtained from the long sheet article 5 to meet the needs. Optical sheets 10 having various dimensions, therefore, can be provided on an as-needed basis. As illustrated in Fig. 8, by handling the sheet article 5 as a scroll 7 rolled around a roll core with a roll axis RA as the center, handling of the sheet article 5 can be improved.

The optical sheet manufacturing method may further include a step of selecting a manufactured optical sheet 10 in addition to the above-described step of manufacturing an optical sheet. The step of selecting an optical sheet 10 may include a step of acquiring an image of a 10 $\mu$m $\times$ 10 $\mu$m measurement region of the first surface and a step of selecting, based on the image of the measurement region, an optical sheet for which one or more recesses having a predetermined size are included in the measurement region. In this context, a predetermined size is a size of a width of 0.1 $\mu$m or more and a depth of 10 nm or more. An optical sheet 10 for which a recess 45 having a predetermined size is included in the measurement region has excellent abrasion resistance. With this selection step, an optical sheet having excellent abrasion resistance can be selected with high precision without conducting abrasion tests using felt or steel wool.

The selection step may include a step of judging whether or not any one or more of conditions A to K below are satisfied and selecting a qualifying optical sheet 10.

[A] The width of the recesses is 1.5 $\mu$m or less

[B] The depth of the recesses is 70 nm or less

[C] The number of recesses included in the 10 $\mu$m $\times$ 10 $\mu$m measurement region of the first surface is three or more

[D] The number of recesses included in the 10 $\mu$m $\times$ 10 $\mu$m measurement region of the first surface is 11 or more

[E] The number of recesses included in the 10 $\mu$m $\times$ 10 $\mu$m measurement region of the first surface is 50 or fewer

[F] One or more recesses are included in each of four subareas obtained by bisecting the 10 $\mu$m $\times$ 10 $\mu$m measurement region along each side

[G] One or more recesses are included in each of nine subareas obtained by trisecting the 10 $\mu$m $\times$ 10 $\mu$m measurement region along each side

[H] The arithmetic mean roughness Sa on the first surface is 8.0 nm or less

[I] The first surface includes a flat portion around the recesses.

[J] The proportion of the recesses in the 10 $\mu$m $\times$ 10 $\mu$m region of the first surface is 15% or less

[K] The ratio of the depth to the width of the recesses is 0.030 or greater

<<<Polarizing Plate 60>>>

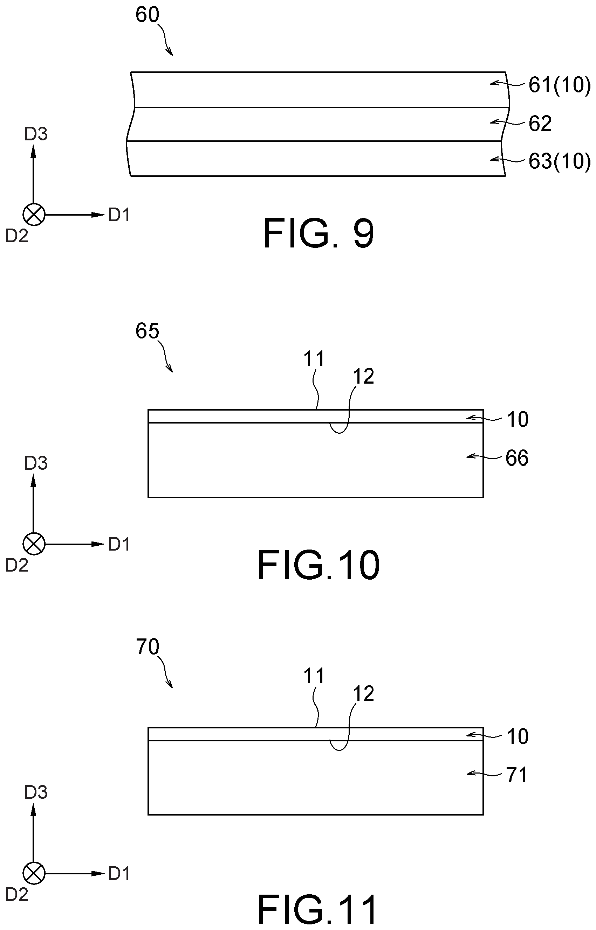

An optical sheet 10 according to this embodiment may be applied to a polarizing plate 60. In the example illustrated in Fig. 9, the polarizing plate 60 includes a first protection sheet 61, a polarizer 62, and a second protection sheet 63. The first protection sheet 61 and the second protection sheet 63 sandwich the polarizer 62 therebetween, covering it from both sides. At least one of the first protection sheet 61 or the second protection sheet 63 may include the optical sheet 10. When only one of the first protection sheet 61 or the second protection sheet 63 includes the optical sheet 10, the other protection sheet may include the substrate 20.

The polarizer 62 transmits a first linear polarization component and blocks a second linear polarization component. The polarizer 62 may be an absorptive polarizer, which absorbs the second linear polarization component. The polarizer 62 may be a reflective polarizer, which reflects the second linear polarization component. The polarizer 62 may be a sheet polarizer, such as a polyvinyl alcohol film, polyvinyl formal film, polyvinyl acetal film, or ethylene-vinyl acetate copolymer saponified film that has been dyed, for example with iodine, and stretched. The polarizer 62 may be a wire-grid polarizer, which is composed of a large number of metal wires arranged in parallel. The polarizer 62 may be a coated polarizer to which a lyotropic liquid crystal or a dichroic guest-host material has been applied, or may be a multilayer thin-film polarizer.

<<<Image Display Device 65>>>

An optical sheet 10 according to this embodiment may be applied to a display device 65. In the example illustrated in Fig. 10, the display device 65 includes an image formation unit 66 and an optical sheet 10. The image formation unit 66 has a display surface 66a, on which it displays images. The optical sheet 10 is stacked to the image formation unit 66 such that its second surface 12 faces the display surface 66a. The optical sheet 10 may be bonded to the image formation unit 66 with a bonding layer that includes, for example, a permanent adhesive material or a temporary adhesive material interposed therebetween. Observers can clearly observe images displayed by the image formation unit 66 through the optical sheet 10, with reflection on the first surface 11 of the optical sheet 10 reduced. The image formation unit 66 is not particularly limited. Examples of image formation units 66 include a liquid-crystal display element, an EL display element, a plasma display element, and an electronic paper element.

<<<Panel 70>>>

An optical sheet 10 according to this embodiment is applicable to various uses. Fig. 11 illustrates a panel 70 to which an optical sheet 10 is applied. The panel 70 includes an optical sheet 10 and a bonding target article 71 to which the optical sheet 10 has been bonded. By virtue of the optical sheet 10, the panel 70 constitutes a reflection-reducing article, which has a function of reducing reflection. The optical sheet 10 is stacked to the bonding target article 71 such that its second surface 12 faces the bonding target article 71. The optical sheet 10 may be bonded to the bonding target article 71 with a bonding layer that includes, for example, a permanent adhesive material or a temporary adhesive material interposed therebetween. Examples of bonding target articles 71 include an instrument panel, a timepiece, a display case, a display window, and window glazing.

EXAMPLES

The present disclosure will be described in further detail with examples. The present disclosure is not limited by the examples below.

1. Measurements and Evaluations

Measurements and evaluations of optical sheets of examples and comparative examples were performed as described below. The test environment when each measurement and evaluation were performed was a temperature of 23°C $\pm$ 2°C and a relative humidity of 50% $\pm$ 5%. Before the start of each measurement and evaluation, the samples of interest were placed for 16 hours in this test environment.

1-1. Luminous Reflectance Y

From the optical sheets of Examples 1 to 3 and Comparative Example 1, a 5 cm $\times$ 5 cm sample was cut out. The samples were visually inspected to confirm the absence of dust, flaws, and other abnormalities. Using the method described above, the luminous reflectance Y (%) of the optical sheet according to each example or comparative example was measured. The measurement of luminous reflectance Y was performed using "V780" UV-visible/NIR spectrophotometer, manufactured by JASCO Corporation. The measurement results for luminous reflectance Y are presented in Table 1.

1-2. Total Transmittance and Transmission Haze

From the optical sheets of Examples 1 to 3 and Comparative Example 1, a 5 cm $\times$ 10 cm sample was cut out. The samples were visually inspected to confirm the absence of dust, flaws, and other abnormalities. Using the method described above, the total transmittance (%) of the optical sheet according to each example or comparative example was measured. The measurement of total transmittance was performed using "HM-150" haze meter, manufactured by Murakami Color Research Laboratory Co., Ltd. The measurement results for total transmittance (Tt) are presented in the "Tt" section of Table 1.

From the optical sheets of Examples 1 to 3 and Comparative Example 1, a 5 cm $\times$ 10 cm sample was cut out. The samples were visually inspected to confirm the absence of dust, flaws, and other abnormalities. Using the method described above, the transmission haze (%) of the optical sheet according to each example or comparative example was measured. The measurement of transmission haze was performed using "HM-150" haze meter, manufactured by Murakami Color Research Laboratory Co., Ltd. The measurement results for transmission haze (Hz) are presented in the "Hz" section of Table 1.

1-3. Evaluations of Recesses

From each of the optical sheets of the examples and comparative examples, three measurement samples were cut off. The dimensions of the measurement samples were 5 mm $\times$ 5 mm squares. Each sample was visually inspected to confirm the absence of dust, flaws, and other abnormalities. Using an atomic force microscope, the surface of each measurement sample formed by the first surface of the optical sheet was observed. The observation of the surface of the measurement samples was performed using "SPM-9700," manufactured by Shimadzu Corporation, as an atomic force microscope

(AFM).

First, multiple flat and round metal plates having a diameter of 15 mm and a thickness of 1 mm were prepared. To each metal plate, carbon double-sided tape manufactured by Nisshin EM Co., Ltd. was attached. One measurement sample was placed on the double-sided tape, whereby the measurement sample was immobilized on the metal plate. This was done such that the surface of each measurement sample formed by the first surface of the optical sheet faced upward. To ensure bonding between the tape and the measurement sample, the metal plate with a sample was left in a desiccator overnight. After being left overnight, the metal plate with a sample was immobilized on the measurement mount of an atomic force microscope (product name "SPM-9700," manufactured by Shimadzu Corporation) using a magnet. For each measurement sample, images relating to the surface of 10-$\mu$m square measurement regions were acquired using the tapping mode of the atomic force microscope. For each measurement sample, five 10-$\mu$m square measurement regions were selected, and images of the five measurement regions were acquired.

The measurement of the surface profile of the samples was conducted using "SPM Manager," the software attached to the atomic force microscope, in its On-Line (measurement) mode. The measurement conditions were as follows.

(AFM Measurement Conditions)

- Measurement mode: phase

- Scanning size: 10 $\mu$m $\times$ 10 $\mu$m

- Scanning rate: 2.0 to 2.5 Hz (a 10-$\mu$m scanner was used)

- Number of pixels: 512 $\times$ 512

- Cantilever used: NCHR, manufactured by NanoWorld AG (resonant frequency, 320 kHz; spring constant, 42 N/m)

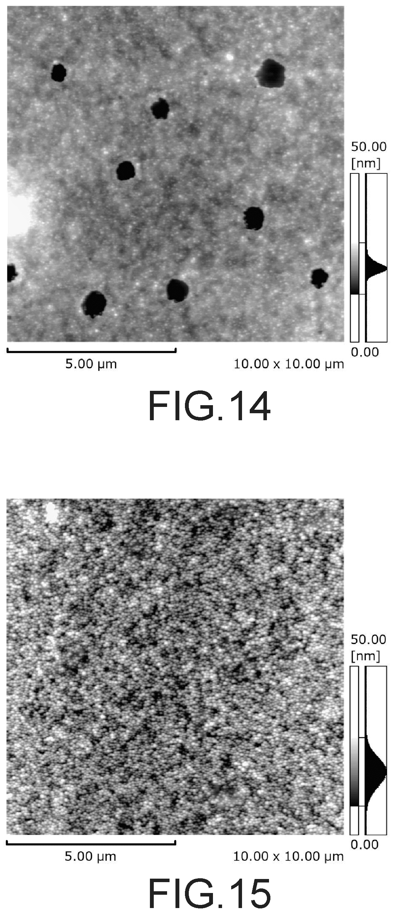

Fig. 12 is an image depicting one measurement region in Example 1. Fig. 13 is an image depicting one measurement region in Example 2. Fig. 14 is an image depicting one measurement region in Example 3. Fig. 15 is an image depicting one measurement region in Comparative Example 1.

As presented in Fig. 12 to Fig. 15, observation images obtained using an atomic force microscope express height by color density. Points in darker colors in the images indicate points at which height is lower within the measurement region. Points in lighter colors in the images indicate points at which height is higher within the measurement region. In the images presented in Fig. 12 to Fig. 15, the color is expressed by brown. The scale bars at the lower right of the images presented in Fig. 12 to Fig. 15 indicate relationships between color density and height. At the lower right of the images, histograms are presented corresponding to the scale bars. The histograms represent frequency distributions of regions indicated by the colors on the scale bars. The histograms were automatically acquired in connection with the acquisition of the images using the atomic force microscope.

From the images presented in Fig. 12 to Fig. 14, recesses are identified as regions in darker colors. That is, from the images acquired using an atomic force microscope presented in Fig. 12 to Fig. 15, the presence or absence of depressions that can meet the definition of recesses having a predetermined size can be identified.

An atomic force microscope forms images by acquiring three-dimensional data of the surface of measurement regions corresponding to the first surface of the optical sheet. An atomic force microscope can generate data of a cross-section that traverses a recess in any direction. That is, cross-sectional profiles 45x as illustrated in Fig. 3 and Fig. 4 are obtained. As mentioned above, based on plan view images and cross-sectional profiles, the widths of recesses and the depths of recesses can be measured.

Using an atomic force microscope, images in five measurement regions were acquired for each of the three measurement samples for each of the examples and comparative examples. That is, for each of the examples and comparative examples, 15 images were acquired. Based on such images, the following measurements and evaluations were performed for each of the examples and comparative examples. The results are presented in Table 1.

(Evaluation 1) Presence or Absence of Recesses

As an example, in the plan view images presented in Fig. 12 to Fig. 15, a recess having a long maximum length was identified, and whether the width of the recess was 0.1 $\mu$m or more and the depth of the recess was 10 nm or more was examined based on a cross-sectional profile of the recess. A recess having a width of 0.1 $\mu$m or more and a depth of 10 nm or more is also referred to simply as "recess having a predetermined size." When a recess having a predetermined size was present in 12 or more of the 15 measurement regions for the example or comparative example, the sheet was judged to have a recess having a predetermined size included in a measurement region, and the "Evaluation 1: Presence or absence of recesses" section in Table 1 was marked with "A." When no recess having a predetermined size was present in four or more of the 15 measurement regions for the example or comparative example, the sheet was judged to have no recess having a predetermined size included in a measurement region, and the "Evaluation 1: Presence or absence of recesses" section in Table 1 was marked with "B." The number of measurement regions in which a recess having a predetermined size was present among the 15 measurement regions for each of Examples 1 to 6 was 15.

(Evaluation 2) Width of Recesses

For the measurement regions that were judged to have a recess having a predetermined size present therein, the widths of the recesses that had a predetermined size and were confirmed to be present in the measurement regions were measured based on cross-sectional profiles that traversed the recesses. For each example or comparative example, the arithmetic mean of the measured values of width of the recesses was calculated, and the calculated mean of the measured values was reported as the width of recesses for the example or comparative example. The "Evaluation 2: Width of recesses" section in Table 1 was marked with the width of recesses for the example or comparative example. The number of measured values used when calculating the arithmetic mean is the number of measurement regions for which it was judged that the recess having a maximum length for the example or comparative example had a width of 0.1 $\mu$m or more and a depth of 10 nm or more (i.e., 15). This also applies to the following (Evaluation 3) Depth of Recesses and (Evaluation 4) Number of Recesses in the same manner.

For Comparative Example 2 and Comparative Example 3, it was judged in (Evaluation 1) that no recess having a predetermined size was present. The "Evaluation 2: Width of recesses" section in Table 1 was marked with the width of the recess judged to have the longest maximum length. On the first surface of the optical sheets of Comparative Example 2 and Comparative Example 3, recesses were observed. The recesses formed in Comparative Example 2 had a larger plan view shape compared with the recesses formed in Examples 1 to 6. The recesses formed in Comparative Example 3 had a smaller plan view shape compared with the recesses formed in Examples 1 to 6.

(Evaluation 3) Depth of Recesses

For the measurement regions that were judged to have a recess having a predetermined size present therein, the depths of the recesses that had a predetermined size and were confirmed to be present in the measurement regions were measured based on cross-sectional profiles that traversed the recesses. For each example or comparative example, the arithmetic mean of the measured values of depth of the recesses was calculated, and the calculated mean of the measured values was reported as the depth of recesses for the example or comparative example. The "Evaluation 3: Depth of recesses" section in Table 1 was marked with the depth of recesses for the example or comparative example.

For Comparative Example 2 and Comparative Example 3, it was judged in (Evaluation 1) that no recess having a predetermined size was present. The "Evaluation 3: Depth of recesses" section in Table 1 was marked with the depth of the recess judged to have the longest maximum length. The recesses formed in Comparative Example 2 had a greater depth compared with the recesses formed in Examples 1 to 6. The recesses formed in Comparative Example 3 had a smaller depth compared with the recesses formed in Examples 1 to 6.

(Evaluation 4) Number of Recesses

For the measurement regions that were judged to have a recess having a predetermined size present therein, the number of recesses confirmed to be present in the measurement regions was measured based on plan view images and cross-sectional profiles. For each example or comparative example, the arithmetic mean of the measured number of recesses having a predetermined size was calculated, and the calculated mean of the measured number was reported as the number of recesses for the example or comparative example. The "Evaluation 4: Number of recesses" section in Table 1 was marked with the number of recesses having a predetermined size for the example or comparative example.

For Comparative Example 2 and Comparative Example 3, it was judged in (Evaluation 1) that no recess having a predetermined size was present. It was, however, confirmed that recesses were formed in Comparative Examples 2 and 3, although they did not have a predetermined size. In Comparative Example 2, an average of 12 recesses that did not have a predetermined size were observed in each measurement region. In Comparative Example 3, an average of 15 recesses that did not have a predetermined size were observed in each measurement region.

(Evaluation 5) Aspect Ratio

By dividing the depth D of recesses calculated in (Evaluation 3) by the width W of recesses calculated in (Evaluation 2), the aspect ratio (D/W) was calculated. The "Evaluation 5: Aspect ratio" section in Table 1 was marked with the aspect ratio for the example or comparative example. When the aspect ratio was calculated, the unit of the depth D and the unit of the width W were made consistent.

(Evaluation 6) Proportion by Area

For Examples 1 to 3, the proportion by area of recesses in a 10 $\mu$m $\times$ 10 $\mu$m region of the first surface was measured. For the measurement regions that were judged to have a recess having a predetermined size present therein, the proportion by area of recesses in each measurement region was measured. The proportion by area (%) was measured by subjecting a plan view image to image analysis. In each of Examples 1 to 3, the arithmetic mean of the proportion by area measured in each measurement region judged to have a recess having a predetermined size present therein was reported as the proportion by area (%) of recesses in a measurement region. The proportion by area for Example 1 was 2.9%. The proportion by area for Example 2 was 1.5%. The proportion by area for Example 3 was 4.2%.

1-4. Evaluation of Arithmetic Mean Roughness Sa

From each of the optical sheets of the examples and comparative examples, three measurement samples were cut off. The dimensions of the measurement samples were 5 mm $\times$ 5 mm squares. Each sample was visually inspected to confirm the absence of dust, flaws, and other abnormalities. For each measurement sample, images of five measurement regions separate from one another were acquired using an atomic force microscope. The measurement regions were on the surface of the sample formed by the first surface of the optical sheet.

The atomic force microscope used was "SPM-9700," manufactured by Shimadzu Corporation. The measurement of the surface profile of the samples was conducted using "SPM Manager," the software attached to the atomic force microscope, in its On-Line (measurement) mode. The measurement conditions were as follows.

(AFM Measurement Conditions)

- Measurement mode: phase

- Scanning size: 10 $\mu$m $\times$ 10 $\mu$m

- Scanning rate: 2.0 to 2.5 Hz (a 10-$\mu$m scanner was used)

- Number of pixels: 512 $\times$ 512

- Cantilever used: NCHR, manufactured by NanoWorld AG (resonant frequency, 320 kHz; spring constant, 42 N/m)

For data acquisition, five measurement regions separate from one another were selected for one measurement sample, and data relating to the surface profile was acquired for each of the three measurement samples $\times$ five measurement regions (a total of 15 measurement regions). For each of the examples and comparative examples, the arithmetic mean roughness Sa values for the 15 measurement regions were measured, and the arithmetic mean of the 15 measured values was reported as the arithmetic mean roughness Sa for the example or comparative example. The "Arithmetic mean roughness Sa (nm)" section in Table 1 was marked with the measurement results for arithmetic mean roughness Sa.

1-5. Steel Wool Resistance

From the optical sheets according to the examples and comparative examples, a 50 mm $\times$ 100 mm sample was cut out. The samples were visually inspected to confirm the absence of dust, flaws, and other abnormalities. The evaluators were 20 people selected from healthy individuals in their thirties with a visual acuity of 0.7 or higher. Using the method described above, a steel wool abrasion resistance test was conducted on the optical sheet according to each example or comparative example. The steel wool abrasion resistance test was performed using "AB-301-S" colorfastness rubbing tester, manufactured by Tester Sangyo Co., Ltd.

The sample that completed a 1000-cycle steel wool abrasion resistance test under a load of 1000 g was removed from the tester, and the surface of the sample formed by the first surface of the optical sheet was observed under the observation conditions specified above. Each sample was evaluated according to the criteria provided below. The evaluators were 20 people selected from healthy individuals in their thirties with a visual acuity of 0.7 or higher. In the criteria below, "AA" has the highest abrasion resistance, and "AA" and "A" are for optical sheets judged to have resistance to the steel wool abrasion resistance test. "B" is for optical sheets judged not to have resistance to the steel wool abrasion resistance test. It should be noted that the test conditions of "a load of 1000 g and 1000 cycles" in the steel wool abrasion resistance test are conditions more severe than the conditions that antireflection sheets (AR sheets or LR sheets) attached to the display surface of display devices are typically required to withstand.

The evaluation result for each of the examples and comparative examples is presented in the "Resistance to SW" section under "Evaluation results" in Table 1.

AA: There were 18 or more evaluators who observed no flaw on the surface. Even when flaws were observed, the flaws were minor, and the severity was acceptable for use as a product.

A: There were 12 or more evaluators who observed no flaw on the surface. Even when flaws were observed, the flaws were minor, and the severity was acceptable for use as a product.

B: The number of evaluators who observed no flaw on the surface was 11 or fewer. Alternatively, any evaluator found on the surface a flaw of a severity that poses a problem in use as a product.

1-6. Felt Resistance

From the optical sheets according to the examples and comparative examples, a 50 mm × 100 mm sample was cut out. The samples were visually inspected to confirm the absence of dust, flaws, and other abnormalities. Using the method described above, a felt abrasion resistance test was conducted on the optical sheet according to each example or comparative example. The felt abrasion resistance test was performed using "AB-301-S" colorfastness rubbing tester, manufactured by Tester Sangyo Co., Ltd.

The sample that completed a 10000-cycle felt abrasion resistance test under a load of 200 g was removed from the tester, and the surface of the sample formed by the first surface of the optical sheet was observed under the observation conditions specified above. Each sample was evaluated according to the criteria provided below. The evaluators were 20 people selected from healthy individuals in their thirties with a visual acuity of 0.7 or higher. In the criteria below, "AA" has the highest abrasion resistance, and "AA" and "A" are for optical sheets judged to have resistance to the felt abrasion resistance test. "B" is for optical sheets judged not to have resistance to the felt abrasion resistance test.

The evaluation result for each of the examples and comparative examples is presented in the "Resistance to felt" section under "Evaluation results" in Table 1.

AA: There were 18 or more evaluators who observed no flaw on the surface. Even when flaws were observed, the flaws were minor, and the severity was acceptable for use as a product.

A: There were 12 or more evaluators who observed no flaw on the surface. Even when flaws were observed, the flaws were minor, and the severity was acceptable for use as a product.

B: The number of evaluators who observed no flaw on the surface was 11 or fewer. Alternatively, any evaluator found on the surface a flaw of a severity that poses a problem in use as a product.

2. Preparation of Optical Sheets

[COMPARATIVE EXAMPLE 1]

Onto an 80-$\mu$m thick triacetylcellulose substrate, resin layer coating solution 1 (HC layer coating solution 1), having the formula specified below, was applied. Then the coating was dried at 70°C × 1 minute to volatilize the solvents. Subsequently, the coating was irradiated with ultraviolet radiation at an integrated intensity of 100 mJ/cm$^2$, whereby a resin layer (a hard-coat layer) having a dry thickness of 10 $\mu$m was produced.

Thereafter, second functional layer coating solution 1 (high-refractive-index layer coating solution 1), having the formula specified below, was applied onto the resin layer, and then the coating was dried at 70°C × 1 minute to volatilize the solvents. Subsequently, the coating was irradiated with ultraviolet radiation at an integrated intensity of 100 mJ/cm$^2$, whereby a second functional layer (a high-refractive-index layer) having a dry thickness of 150 nm was formed.

After that, functional layer coating solution 1 (low-refractive-index layer coating solution 1), having the formula specified below, was applied onto the second functional layer. Then the applied coating was dried under conditions of 50°C × 30 seconds (drying air velocity, 0.5 m/s), and then the coating was dried under conditions of 50°C × 30 seconds (drying air velocity, 5 m/s), whereby the solvents were volatilized. Subsequently, the coating was irradiated with ultraviolet radiation at an integrated intensity of 200 mJ/cm$^2$, whereby a functional layer (a low-refractive-index layer) having a dry thickness of 100 nm was formed. In this manner, an optical sheet of Comparative Example 1 was obtained.

<Resin Layer Coating Solution 1 (hard-coat layer coating solution 1)>

- Ultraviolet-curable acrylate-containing composition, 100 parts by mass
  (manufactured by Toagosei Co., Ltd.; trade name "ARONIX M-450"; solids content, 100%)

- Ultraviolet-curable acrylate-containing composition, 77 parts by mass
  (DKS Co., Ltd.; trade name "NEW FRONTIER R-1403MB"; solids content, 80%)

- Fluorine leveling agent, 5 parts by mass
  (DIC Corporation; trade name "MEGAFACE F-568")

- Photoinitiator, 5 parts by mass
  (IGM Resins B.V.; trade name "Omnirad 184"; solids content, 100%)

- Methyl isobutyl ketone, 68 parts by mass

- Methyl ethyl ketone, 200 parts by mass

<Second Functional Layer Coating Solution 1 (high-refractive-index layer coating solution 1)>

- PETA, 100 parts by mass
  (manufactured by Toagosei Co., Ltd.; trade name "ARONIX M-305"; solids content, 100%)
- High-refractive-index particles, 300 parts by mass
  (Nippon Shokubai Co., Ltd.; trade name "ZIRCOSTAR"; solids content, 70%)
- Fluorine leveling agent, 0.7 parts by mass
  (DIC Corporation; trade name "MEGAFACE F251"; solids content, 100%)
- Photoinitiator, 9 parts by mass
  (trade name "Omnirad 127," manufactured by IGM Resins B.V.; solids content, 100%)
- Methyl isobutyl ketone, 3173 parts by mass
- Propylene glycol monomethyl ether, 3173 parts by mass

<Functional Layer Coating Solution 1 (low-refractive-index layer coating solution 1)>

- Polyfunctional acrylate composition, 100 parts by mass
  (manufactured by DKS Co., Ltd.; trade name "NEW FRONTIER MF-001")

- Hollow silica particles, 200 parts by mass
  (average primary particle diameter, 75 nm; particles having a surface treated with a silane coupling agent having a methacryloyl group)

- Solid silica particles, 110 parts by mass
  (average primary particle diameter, 12.5 nm; particles having a surface treated with a silane coupling agent having a methacryloyl group)

- Silicone leveling agent, 13 parts by mass

(Shin-Etsu Chemical Co., Ltd.; trade name "X-22-164E"; solids content, 100%)

- Photoinitiator, 4.3 parts by mass
  (IGM Resins B.V.; trade name "Omnirad 127"; solids content, 100%)

- Solvents, 14,867 parts by mass
  (A solvent mixture of methyl isobutyl ketone and 1-methoxy-2-propyl acetate. Ratio by mass = 68/32)

[EXAMPLE 1]

Resin layer coating solution 2 (HC layer coating solution 2), having the formula specified below, was applied onto a substrate. The applied coating was dried and cured, whereby a resin layer (a hard-coat layer) having a dry thickness of 10 $\mu$m was produced. The substrate used in Example 1 was identical to the substrate used in Comparative Example 1 above. The resin layer in Example 1 was produced using a method and conditions that were different from those in Comparative Example 1 above in that the resin layer coating solution was changed and were otherwise identical to those in Comparative Example 1.

Thereafter, functional layer coating solution 2 (low-refractive-index layer coating solution 2), having the formula specified below, was applied onto the resin layer. The applied coating was dried and cured, whereby a functional layer (a low-refractive-index layer) having a dry thickness of 100 nm was formed. In this manner, an optical sheet of Example 1 was obtained. The optical sheet of Example 1, therefore, included no second functional layer, unlike the optical sheet of Comparative Example 1. The functional layer in Example 1 was produced using a method and conditions that were different from those in Comparative Example 1 above in that the functional layer coating solution was changed and were otherwise identical to those in Comparative Example 1.

<Resin Layer Coating Solution 2 (hard-coat layer coating solution 2)>

- Ultraviolet-curable acrylate-containing composition, 100 parts by mass
  (manufactured by Toagosei Co., Ltd.; trade name "ARONIX M-450"; solids content, 100%)
- Solid silica particles, 109 parts by mass
  (average primary particle diameter, 12.5 nm; particles having a surface treated with a silane coupling agent having a methacryloyl group; solids content, 46%)
- Silicone leveling agent, 2 parts by mass
  (manufactured by Dainichiseika Color & Chemicals Mfg. Co., Ltd.; trade name "10-301"; solids content, 5%)
- Photoinitiator, 4 parts by mass
  (IGM Resins B.V.; trade name "Omnirad 184"; solids content, 100%)
- Methyl isobutyl ketone, 69 parts by mass
- Methyl ethyl ketone, 297 parts by mass
- Propylene glycol monomethyl ether, 33 parts by mass

<Functional Layer Coating Solution 2 (low-refractive-index layer coating solution 2)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1143 parts by mass
  (average primary particle diameter, 65 nm; particles having a surface treated with a silane coupling agent having a methacryloyl group; solids content, 20%)
- Solid silica particles, 50 parts by mass
  (average primary particle diameter, 9.0 nm; particles having a surface treated with a silane coupling agent having a methacryloyl group; solids content, 50%)
- Alumina particles, 83 parts by mass
  (average primary particle diameter, 15.0 nm; particles having a surface treated with a silane coupling agent having a methacryloyl group; solids content, 30%)

- Leveling agent, 633 parts by mass
  (Shin-Etsu Chemical Co., Ltd.; trade name "X-71-1203M"; solids content, 20%)
- Leveling agent, 113 parts by mass
  (Shin-Etsu Chemical Co., Ltd.; trade name "KP-422"; solids content, 15%)
- Photoinitiator, 6 parts by mass
  (IGM Resins B.V.; trade name "Omnirad 127"; solids content, 100%)
- Methyl isobutyl ketone, 19354 parts by mass
- Propylene glycol monomethyl ether acetate, 2320 parts by mass

[EXAMPLE 2]

In Example 2, an optical sheet of Example 2 was obtained using materials and a method that were different from those in Example 1 above in that functional layer coating solution 2 was changed to functional layer coating solution 3, specified below, and were otherwise the same as in Example 1.

<Functional Layer Coating Solution 3 (low-refractive-index layer coating solution 3)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1111 parts by mass
  (average primary particle diameter, 65 nm; particles having a surface treated with a silane coupling agent having a methacryloyl group; solids content, 20%)
- Solid silica particles, 36 parts by mass
  (average primary particle diameter, 9.0 nm; particles having a surface treated with a silane coupling agent having a methacryloyl group; solids content, 50%)
- Alumina particles, 60 parts by mass
  (average primary particle diameter, 15.0 nm; particles having a surface treated with a silane coupling agent having a methacryloyl group; solids content, 30%)
- Leveling agent, 201 parts by mass
  (Shin-Etsu Chemical Co., Ltd.; trade name "X-71-1203M"; solids content, 20%)
- Leveling agent, 54 parts by mass
  (Shin-Etsu Chemical Co., Ltd.; trade name "KP-422"; solids content, 15%)
- Photoinitiator, 6 parts by mass
  (IGM Resins B.V.; trade name "Omnirad 127"; solids content, 100%)
- Methyl isobutyl ketone, 15511 parts by mass
- Propylene glycol monomethyl ether acetate, 1851 parts by mass

[EXAMPLE 3]

In Example 3, an optical sheet of Example 3 was obtained using materials and a method that were different from those in Example 1 above in that functional layer coating solution 2 was changed to functional layer coating solution 4, specified below, and were otherwise the same as in Example 1.

<Functional Layer Coating Solution 4 (low-refractive-index layer coating solution 4)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 11 parts by mass
  (manufactured by Toagosei Co., Ltd.; trade name "ARONIX M-305"; solids content, 100%)
- Hollow silica particles, 777 parts by mass
  (average primary particle diameter, 65 nm; particles having a surface treated with a silane coupling agent having a methacryloyl group; solids content, 20%)

- Solid silica particles, 39 parts by mass
  (average primary particle diameter, 9.0 nm; particles having a surface treated with a silane coupling agent having a methacryloyl group; solids content, 50%)
- Alumina particles, 65 parts by mass
  (average primary particle diameter, 15.0 nm; particles having a surface treated with a silane coupling agent having a methacryloyl group; solids content, 30%)
- Leveling agent, 457 parts by mass
  (Shin-Etsu Chemical Co., Ltd.; trade name "X-71-1203M"; solids content, 20%)
- Leveling agent, 82 parts by mass
  (Shin-Etsu Chemical Co., Ltd.; trade name "KP-422"; solids content, 15%)
- Photoinitiator, 5 parts by mass
  (IGM Resins B.V.; trade name "Omnirad 127"; solids content, 100%)
- Methyl isobutyl ketone, 14107 parts by mass
- Propylene glycol monomethyl ether acetate, 1580 parts by mass

[EXAMPLE 4]

In Example 4, an optical sheet of Example 4 was obtained using materials and a method that were different from those in Example 1 above in that functional layer coating solution 2 was changed to functional layer coating solution 5, specified below, and were otherwise the same as in Example 1.

<Functional Layer Coating Solution 5 (low-refractive-index layer coating solution 5)>

- Ultraviolet-curable acrylate-containing composition, 100 parts by mass
  (manufactured by Toagosei Co., Ltd.; trade name "ARONIX M-305"; solids content, 100%)
- Hollow silica particles, 650 parts by mass
  (average primary particle diameter, 65 nm; particles having a surface treated with a silane coupling agent having a methacryloyl group; solids content, 20%)
- Solid silica particles, 67 parts by mass
  (average primary particle diameter, 12.5 nm; particles having a surface treated with a silane coupling agent having a methacryloyl group; solids content, 37%)
- Leveling agent, 128 parts by mass
  (Shin-Etsu Chemical Co., Ltd.; trade name "X-71-1203M"; solids content, 20%)
- Leveling agent, 34 parts by mass
  (Shin-Etsu Chemical Co., Ltd.; trade name "KP-422"; solids content, 15%)
- Photoinitiator, 7 parts by mass
  (IGM Resins B.V.; trade name "Omnirad 127"; solids content, 100%)
- Methyl isobutyl ketone, 8828 parts by mass
- Propylene glycol monomethyl ether acetate, 1034 parts by mass

[EXAMPLE 5]

In Example 5, an optical sheet of Example 5 was obtained using materials and a method that were different from those in Example 1 above in that functional layer coating solution 2 was changed to functional layer coating solution 6, specified below, and were otherwise the same as in Example 1.

<Functional Layer Coating Solution 6 (low-refractive-index layer coating solution 6)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1194 parts by mass
  (average primary particle diameter, 65 nm; particles having a surface treated with a silane coupling agent having a methacryloyl group; solids content, 20%)
- Solid silica particles, 57 parts by mass
  (average primary particle diameter, 9.0 nm; particles having a surface treated with a silane coupling agent having a methacryloyl group; solids content, 50%)
- Alumina particles, 96 parts by mass
  (average primary particle diameter, 15.0 nm; particles having a surface treated with a silane coupling agent having a methacryloyl group; solids content, 30%)
- Leveling agent, 660 parts by mass
  (Shin-Etsu Chemical Co., Ltd.; trade name "X-71-1203M"; solids content, 20%)
- Leveling agent, 125 parts by mass
  (Shin-Etsu Chemical Co., Ltd.; trade name "KP-422"; solids content, 15%)
- Photoinitiator, 6 parts by mass
  (IGM Resins B.V.; trade name "Omnirad 127"; solids content, 100%)
- Methyl isobutyl ketone, 20207 parts by mass
- Propylene glycol monomethyl ether acetate, 2424 parts by mass

[EXAMPLE 6]

In Example 6, an optical sheet of Example 6 was obtained using materials and a method that were different from those in Example 1 above in that functional layer coating solution 2 was changed to functional layer coating solution 7, specified below, and were otherwise the same as in Example 1.

<Functional Layer Coating Solution 7 (low-refractive-index layer coating solution 7)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 44 parts by mass
  (manufactured by Toagosei Co., Ltd.; trade name "ARONIX M-305"; solids content, 100%)
- Hollow silica particles, 1148 parts by mass
  (average primary particle diameter, 65 nm; particles having a surface treated with a silane coupling agent having a methacryloyl group; solids content, 20%)
- Solid silica particles, 50 parts by mass
  (average primary particle diameter, 9.0 nm; particles having a surface treated with a silane coupling agent having a methacryloyl group; solids content, 50%)
- Alumina particles, 84 parts by mass
  (average primary particle diameter, 15.0 nm; particles having a surface treated with a silane coupling agent having a methacryloyl group; solids content, 30%)
- Leveling agent, 847 parts by mass
  (Shin-Etsu Chemical Co., Ltd.; trade name "X-71-1203M"; solids content, 20%)
- Leveling agent, 169 parts by mass
  (Shin-Etsu Chemical Co., Ltd.; trade name "KP-422"; solids content, 15%)
- Photoinitiator, 6 parts by mass
  (IGM Resins B.V.; trade name "Omnirad 127"; solids content, 100%)
- Methyl isobutyl ketone, 21125 parts by mass
- Propylene glycol monomethyl ether acetate, 2538 parts by mass

[COMPARATIVE EXAMPLE 2]

In Comparative Example 2, an optical sheet of Comparative Example 2 was obtained using materials and a method that were different from those in Example 1 above in that functional layer coating solution 2 was changed to functional layer coating solution 8, specified below, and were otherwise the same as in Example 1.

<Functional Layer Coating Solution 8 (low-refractive-index layer coating solution 8)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 42 parts by mass
  (manufactured by Toagosei Co., Ltd.; trade name "ARONIX M-305"; solids content, 100%)
- Hollow silica particles, 1137 parts by mass
  (average primary particle diameter, 65 nm; particles having a surface treated with a silane coupling agent having a methacryloyl group; solids content, 20%)
- Solid silica particles, 49 parts by mass
  (average primary particle diameter, 9.0 nm; particles having a surface treated with a silane coupling agent having a methacryloyl group; solids content, 50%)
- Alumina particles, 83 parts by mass
  (average primary particle diameter, 15.0 nm; particles having a surface treated with a silane coupling agent having a methacryloyl group; solids content, 30%)
- Leveling agent, 1049 parts by mass
  (Shin-Etsu Chemical Co., Ltd.; trade name "X-71-1203M"; solids content, 20%)
- Leveling agent, 280 parts by mass
  (Shin-Etsu Chemical Co., Ltd.; trade name "KP-422"; solids content, 15%)
- Photoinitiator, 5 parts by mass
  (IGM Resins B.V.; trade name "Omnirad 127"; solids content, 100%)
- Methyl isobutyl ketone, 22851 parts by mass
- Propylene glycol monomethyl ether acetate, 2753 parts by mass

[COMPARATIVE EXAMPLE 3]

In Comparative Example 3, an optical sheet of Comparative Example 3 was obtained using materials and a method that were different from those in Example 1 above in that functional layer coating solution 2 was changed to functional layer coating solution 9, specified below, and were otherwise the same as in Example 1.

<Functional Layer Coating Solution 9 (low-refractive-index layer coating solution 9)>

- Ultraviolet-curable siloxane compound-containing composition, 100 parts by mass
  (manufactured by Toagosei Co., Ltd.; trade name "AS-SQ TA-100"; solids content, 100%)
- Ultraviolet-curable acrylate-containing composition, 43 parts by mass
  (manufactured by Toagosei Co., Ltd.; trade name "ARONIX M-305"; solids content, 100%)
- Hollow silica particles, 1138 parts by mass
  (average primary particle diameter, 65 nm; particles having a surface treated with a silane coupling agent having a methacryloyl group; solids content, 20%)
- Solid silica particles, 49 parts by mass
  (average primary particle diameter, 9.0 nm; particles having a surface treated with a silane coupling agent having a methacryloyl group; solids content, 50%)
- Alumina particles, 83 parts by mass
  (average primary particle diameter, 15.0 nm; particles having a surface treated with a silane coupling agent having a methacryloyl group; solids content, 30%)
- Leveling agent, 104 parts by mass
  (Shin-Etsu Chemical Co., Ltd.; trade name "X-71-1203M"; solids content, 20%)
- Leveling agent, 13 parts by mass
  (Shin-Etsu Chemical Co., Ltd.; trade name "KP-422"; solids content, 15%)
- Photoinitiator, 6 parts by mass
  (IGM Resins B.V.; trade name "Omnirad 127"; solids content, 100%)
- Methyl isobutyl ketone, 15312 parts by mass
- Propylene glycol monomethyl ether acetate, 1825 parts by mass

[Table 1]

| Table 1 Samples and Evaluation Results | | Example | | | | | | Comparative Example | | |
|---|---|---|---|---|---|---|---|---|---|---|
| | | 1 | 2 | 3 | 4 | 5 | 6 | 1 | 2 | 3 |
| Y value (%) | | 1.0 | 1.0 | 1.0 | - | - | - | 0.1 | - | - |
| Tt (%) | | 95.9 | 95.2 | 95.2 | - | - | - | 95.9 | - | - |
| Hz (%) | | 0.3 | 0.3 | 0.3 | - | - | - | 0.2 | - | - |
| Evaluation 1: Presence or absence of recesses | | A | A | A | A | A | A | B | B | B |
| Evaluation 2: Width of recesses ($\mu$m) | | 0.4 | 0.4 | 0.8 | 0.2 | 1.1 | 1.4 | - | 1.8 | 0.1 |
| Evaluation 3: Depth of recesses (nm) | | 23 | 24 | 38 | 15 | 43 | 61 | - | 62 | 8 |
| Evaluation 4: Number of recesses (recesses) | | 32 | 17 | 9 | 12 | 24 | 15 | - | 12 | 15 |
| Evaluation 5: Aspect ratio | | 0.058 | 0.060 | 0.048 | 0.075 | 0.039 | 0.044 | - | 0.034 | 0.080 |
| Arithmetic mean roughness Sa (nm) | | 3.5 | 4.1 | 4.6 | 3.4 | 6.5 | 7.6 | 8.1 | 10.2 | 3.1 |
| Evaluation results | Resistance to SW | AA | AA | AA | AA | A | A | B | B | B |
| | Resistance to felt | AA | AA | AA | AA | A | A | B | B | B |

Reference Signs List

5, sheet article; 6, roll core; 7, scroll; 10, optical sheet; 11, first surface; 12, second surface; 20, substrate; 30, resin layer; 40, functional layer; 41, binder component; 43, hollow silica particles; 44, solid silica particles; 45, recess; 45a, higher edge; 45b, lower edge; 45c, deepest point; 45e, projection; 45x, cross-sectional profile; 50, second functional layer; 51, binder resin; 52, particles; 60, polarizing plate; 61, first protection sheet; 62, polarizer; 63, second protection sheet; 65, display device; 66, image formation unit; 66a, display surface; 70, panel; 71, bonding target article

**Claims**

1.  An optical sheet including a first surface and a second surface opposing the first surface, the optical sheet comprising: a substrate and a functional layer in order from the second surface toward the first surface, wherein:

    the functional layer contains a binder component and hollow silica particles; and
    in a 10 $\mu$m $\times$ 10 $\mu$m region of the first surface, at least one recess having a width of 0.1 $\mu$m or more and 1.5 $\mu$m or less and a depth of 10 nm or more is included.

2.  The optical sheet according to claim 1, wherein the depth of the recess is 70 nm or less.

3.  The optical sheet according to claim 1, wherein the number of recesses included in the 10 $\mu$m $\times$ 10 $\mu$m region of the first surface is three or more.

4.  The optical sheet according to claim 1, wherein the number of recesses included in the 10 $\mu$m $\times$ 10 $\mu$m region of the first surface is 11 or more.

5.  The optical sheet according to claim 1, wherein the number of recesses included in the 10 $\mu$m $\times$ 10 $\mu$m region of the first surface is 50 or fewer.

6. The optical sheet according to claim 1, wherein the recess is included in each of four subareas obtained by bisecting the 10 $\mu$m $\times$ 10 $\mu$m region along each side.

7. The optical sheet according to claim 1, wherein an arithmetic mean roughness Sa on the first surface is 8.0 nm or less.

8. The optical sheet according to claim 1, wherein the first surface includes a flat portion around the recess.

9. The optical sheet according to claim 1, wherein a proportion of the recess in the 10 $\mu$m $\times$ 10 $\mu$m region of the first surface is 15% or less.

10. The optical sheet according to claim 1, wherein a ratio of the depth to the width of the recess is 0.030 or greater.

11. The optical sheet according to claim 1, wherein the optical sheet has resistance to an abrasion resistance test using steel wool on the first surface performed under the following conditions.
Abrasion resistance test: Steel wool #0000 is used as an abrasive material and is reciprocated for 1000 cycles under a load of 1000 g at a movement speed of 80 mm/second, with a one-way travel distance being 40 mm.

12. The optical sheet according to claim 1, wherein the optical sheet has resistance to an abrasion resistance test using felt on the first surface performed under the following conditions.
Abrasion resistance test: "Jumbo Wearaser®; product number, CS-7," manufactured by TABER Industries, is used as an abrasive material and is reciprocated for 10000 cycles under a load of 200 g at a movement speed of 200 mm/second, with a one-way travel distance being 50 mm.

13. The optical sheet according to claim 1, wherein:

    the optical sheet includes a resin layer positioned between the substrate and the functional layer; and
    the resin layer contains a cured product of a curable resin composition.

14. A sheet article comprising a plurality of optical sheets according to any one of claims 1 to 13.

15. The sheet article according to claim 14, wherein the article is rolled with a roll axis as a center.

16. A polarizing plate comprising:
a first protection sheet, a polarizer, and a second protection sheet, wherein:
at least one of the first protection sheet or the second protection sheet includes the optical sheet according to any one of claims 1 to 13.

17. A display device comprising:

    an image formation unit; and
    the optical sheet according to any one of claims 1 to 13 stacked to the image formation unit.

18. A panel comprising:

    a bonding target article; and
    the optical sheet according to any one of claims 1 to 13 bonded to the bonding target article.

19. An optical sheet selection method relating to:
optical sheets including a first surface and a second surface opposing the first surface, the optical sheets including:
a substrate and a functional layer in order from the second surface toward the first surface, wherein:
the functional layer contains a binder component and hollow silica particles, the method comprising:

    a step of acquiring an image of a 10 $\mu$m $\times$ 10 $\mu$m region of the first surface; and
    a step of selecting, based on the image, an optical sheet for which at least one recess having a width of 0.1 $\mu$m or more and 1.5 $\mu$m or less and a depth of 10 nm or more is included in the region.

20. An optical sheet manufacturing method comprising:
a step of producing optical sheets including a first surface and a second surface opposing the first surface, the optical sheets including:
a substrate and a functional layer in order from the second surface toward the first surface, wherein:

the functional layer contains a binder component and hollow silica particles; and
a step of selecting an optical sheet for which at least one recess having a width of 0.1 $\mu$m or more and 1.5 $\mu$m or less and a depth of 10 nm or more is included in a 10 $\mu$m $\times$ 10 $\mu$m region of the first surface.

FIG. 1

FIG. 2

FIG. 3

FIG. 4

FIG. 5

FIG. 6

44  43  44  43  41  44  43  11  10

40

50

30

20

D3

D1

D2

52  51  52  12

# FIG. 7

RA  6  5

7  6

10

# FIG. 8

FIG. 9

FIG.10

FIG.11

50.00
[nm]

0.00

5.00 µm                    10.00 x 10.00 µm

# FIG.12

50.00
[nm]

0.00

5.00 µm                    10.00 x 10.00 µm

# FIG.13

FIG.14

FIG.15

## INTERNATIONAL SEARCH REPORT

| International application No. |
|---|
| **PCT/JP2024/034901** |

| A. | CLASSIFICATION OF SUBJECT MATTER |
|---|---|

*G02B 1/14*(2015.01)i; *B32B 3/30*(2006.01)i; *G02B 5/30*(2006.01)i
FI:   G02B1/14; B32B3/30; G02B5/30

According to International Patent Classification (IPC) or to both national classification and IPC

| B. | FIELDS SEARCHED |
|---|---|

Minimum documentation searched (classification system followed by classification symbols)

G02B1/14; B32B3/30; G02B5/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2010-217504 A (KONICA MINOLTA OPTO, INC.) 30 September 2010 (2010-09-30) claims 1-6, paragraphs [0002]-[0005], [0027]-[0029], [0053], [0100], [0119]-[0124], [0272], [0286]-[0331], table 1, fig. 1-3 | 1-20 |
| A | WO 2019/208786 A1 (DAI NIPPON PRINTING CO., LTD.) 31 October 2019 (2019-10-31) entire text, all drawings | 1–20 |
| A | JP 2020-166236 A (DAI NIPPON PRINTING CO., LTD.) 08 October 2020 (2020-10-08) entire text, all drawings | 1–20 |
| A | JP 2015-108733 A (CHEIL INDUSTRIES INC.) 11 June 2015 (2015-06-11) entire text, all drawings | 1–20 |
| A | JP 2014-085383 A (CHEIL INDUSTRIES INC.) 12 May 2014 (2014-05-12) entire text, all drawings | 1–20 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/034901**

| Patent document cited in search report | | | Publication date (day/month/year) | Patent family member(s) | | | Publication date (day/month/year) |
|---|---|---|---|---|---|---|---|
| JP | 2010-217504 | A | 30 September 2010 | (Family: none) | | | |
| WO | 2019/208786 | A1 | 31 October 2019 | US | 2021/0239892 | A1 | |
| | | | | entire text, all drawings | | | |
| | | | | KR | 10-2021-0005672 | A | |
| | | | | CN | 112313545 | A | |
| | | | | TW | 201945178 | A | |
| | | | | JP | 2024-26096 | A | |
| JP | 2020-166236 | A | 08 October 2020 | US | 2022/0091303 | A1 | |
| | | | | entire text, all drawings | | | |
| | | | | WO | 2020/145373 | A1 | |
| | | | | EP | 3909764 | A1 | |
| | | | | KR | 10-2021-0113270 | A | |
| | | | | CN | 113272136 | A | |
| | | | | CN | 116719106 | A | |
| | | | | TW | 202035581 | A | |
| | | | | TW | 202415731 | A | |
| JP | 2015-108733 | A | 11 June 2015 | US | 2016/0304722 | A1 | |
| | | | | entire text, all drawings | | | |
| | | | | WO | 2015/084097 | A1 | |
| | | | | KR | 10-2015-0065576 | A | |
| | | | | TW | 201529312 | A | |
| | | | | CN | 105793741 | A | |
| | | | | JP | 2017-524745 | A | |
| JP | 2014-085383 | A | 12 May 2014 | KR | 10-2014-0050538 | A | |
| | | | | KR | 10-2016-0076504 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019208786 A